# EUROPEAN PATENT SPECIFICATION

(11) **EP 4 511 608 B1**
(45) Date of publication and mention of the grant of the patent: **15.07.2026**
(21) Application number: 23720080.3
(22) Date of filing: 17.04.2023
(51) Int. Cl.: F28D 20/02, F28D 21/00

(54) **USE OF PHASE CHANGE MATERIALS TO STORE ENERGY FOR REFRIGERATION IN CHEMICAL PRODUCTION PROCESSES**
VERWENDUNG VON PHASENWECHSELMATERIALIEN ZUM SPEICHERN VON ENERGIE ZUR KÜHLUNG IN CHEMISCHEN PRODUKTIONSPROZESSEN
UTILISATION DE MATÉRIAUX À CHANGEMENT DE PHASE POUR STOCKER DE L'ÉNERGIE DE RÉFRIGÉRATION DANS DES PROCESSUS DE PRODUCTION DE PRODUITS CHIMIQUES

(30) Priority: 20.04.2022 EP 22169047
(43) Date of publication of application: 26.02.2025
(73) Proprietor: SABIC Global Technologies B.V., 4612 PX Bergen op Zoom (NL)
(72) Inventor: STEVENSON, Scott A., Bengaluru 562125 (IN); WARD, Andrew Mark, Bengaluru 562125 (IN); SCHROER, Joseph William, Bengaluru 562125 (IN); BROEKHUIS, Robert, Bengaluru 562125 (IN); LATTNER, James, Bengaluru 562125 (IN)
(74) Representative: Fish & Richardson P.C.
(86) International application number: PCT/EP2023/059891
(87) International publication number: WO 2023/202974

(56) References cited:
- US-A- 5 100 570
- US-A1- 2009 194 257
- US-A1- 2018 179 960

## Description

### FIELD OF DISCLOSURE

The present disclosure is generally related to refrigeration loops in processes for producing chemicals and, more particularly but not by way of limitation, to a system and a method involving the use of phase change materials (PCMs) to store energy for refrigeration in processes for producing chemicals.

### BACKGROUND

As chemical plants move from burning fossil fuels to meet daily power needs to using electricity from the power grid and/or from renewable sources, the availability and cost of electricity will vary over time. For example, electrical energy from the power grid is typically more expensive during peak consumption hours. Additionally, production of solar and wind energy varies with time of day and weather conditions-e.g., night hours and overcast time periods reduce or interrupt the generation of electricity by solar panels. Likewise, during periods when wind is slower or non-existent, generation of electricity by wind turbines is reduced or interrupted. Additionally, utilities may offer discounts to customers that can be flexible in their consumption demands during peak hours when electricity production or grid capacity are stressed. Storing energy can shift some consumption of energy from external sources (e.g., grid, solar, wind or the like) away from hours during which energy is more expensive (e.g., peak grid hours) or of limited availability (e.g., dark hours for solar or still hours for wind). Reducing external energy needs during peak grid hours also has the added benefit of encouraging stability of the grid. Commercially, however, it is typically important for a chemical plant to maintain consistent throughput, even during periods when external energy needs are reduced-i.e., even when drawing relatively less electricity from external sources.
US 2009/194257 A1 describes a thermal storage system includes a thermal storage device that includes *inter alia* an aqueous slurry of micro-encapsulated phase change material.
US 5100570 A describes a cool storage composition that freezes at about 47°F and said composition is composed of a 39 percent NaOH-in-water solution to which has been added in ionizable, water-soluble salt, such as KCl.
US 2018/179960 A1 describes systems and methods for pump control of a closed thermodynamic cycle system, such as Brayton cycle.

### SUMMARY

The present systems and methods utilize phase change material (PCM) to absorb thermal energy to run or supplement refrigeration cycles in chemical separation processes for chemical plants, for example in refrigeration cycles where the compressor(s) is/are driven by electric drivers (as opposed to burning fossil fuels). A PCM is "charged" by removing thermal energy from the PCM to transition the PCM from an initial state to a lower enthalpy state, such that the PCM can be then be "discharged" by absorbing thermal energy from the refrigeration cycle to reduce the external power (e.g., from electricity or combustion of fossil fuels) that is required by the refrigeration cycle. For example, the PCM can be used to reduce external power requirements during periods when electricity from renewable energy sources is less available or not available (e.g., during periods of reduced sunlight for solar power sources, or reduced wind for wind power sources), or when electricity from a power grid is more expensive or not available (e.g., during peak hours, when a utility requests reduced consumption for grid stability, or during grid outages). Such uses of PCMs are believed to have not previously been used for refrigeration in chemical separation processes in chemical plants due at least in part to the massive energy requirements of such chemical separation processes. The magnitude of such energy requirements has traditionally not only been cost prohibitive, but have also been hampered by the technical challenges inherent in using PCM to "store" such large amounts of energy. Moreover, chemical processes utilizing refrigeration loops (e.g. steam crackers and ammonia synthesis plants) have utilized steam derived from the combustion of fossil hydrocarbons as the primary source of power for refrigeration; although they emit CO₂, they are relatively unaffected by variations in electrical prices or demands on the electrical supply. Additionally, some prior uses of PCMs to "store" energy have typically reclaimed that energy in the form of electricity, resulting in reduced efficiency relative to the present use of PCM to absorb thermal energy from a chemical separation process (which does not require further conversion of thermal energy to electricity).

When used for refrigeration in chemical separation processes, PCMs will typically have scalability advantages and other benefits over cryogenic liquefaction storage systems. For example, a PCM may be selected from nonflammable materials, so large amounts can be stored with lower safety risk. This could be done for liquefaction systems, for example using liquid nitrogen instead of liquid ethylene, but at the expense of inferior properties in terms of heat capacity and energy storage density relative to hydrocarbon liquefaction. Another advantage includes avoiding the undesirable properties of vapor phase materials, such as large required volumes and poor thermal conductivity. Liquefied gases generally have a relatively high energy storage density, but such gases when in a gaseous state typically require massive storage volumes (unless using air that can be vented to the atmosphere, but doing so requires the intake of replacement air at ambient temperatures). Additionally, liquid thermal conductivities are typically 10 times or higher than vapor thermal conductivities; for example, the thermal conductivities of liquid ethylene and liquid nitrogen are 0.18 and 0.155 W/m/K, respectively, while the thermal conductivities of both ethylene and nitrogen vapor are only 0.017 W/m/K. Higher thermal conductivity is important in being able to access the stored energy across the large energy storage volume in a reasonable amount of time. Even so, there is a tradeoff in that enthalpies of fusion are generally much smaller than that of the enthalpy of vaporization for the same material. As an example, the enthalpy of fusion of ethylene is only 119 kJ/kg, while its enthalpy of vaporization is 482 kJ/kg. Nevertheless, this tradeoff is typically outweighed by the other benefits of using a solid-liquid PCM relative to cryogenic liquefaction that instead relies on a gas-liquid transition.

Solidifying a PCM requires removing thermal energy from the PCM; however, such removal of energy from the PCM is referred to herein as "charging" the PCM because the removal of the thermal energy to "charge" the PCM requires power (from electricity or combustion of fossil fuels) to drive one or more compressors in a refrigeration cycle that cools the PCM. Once cooled and thereby solidified, the PCM can then absorb thermal energy from a chemical separation process that would have otherwise required further operation of compressor(s) to continue to drive a refrigeration cycle for the chemical separation process. As such, the initial removal of thermal energy from the PCM effectively "stores" the power that would have otherwise been required to run the refrigeration cycle for the chemical separation process during the period when the PCM is being "discharged" by absorbing thermal energy from the chemical separation process.

When, for example, a chemical plant draws power from an electrical grid, differences in the price of electricity at different times of the day can make it advantageous to draw more power from the grid to both (a) run compressor(s) in a refrigeration cycle for a chemical separation process and (b) charge a PCM during non-peak hours (when electricity is less expensive), and then to draw less power from the grid during peak hours (when electricity is more expensive) by using the PCM to absorb thermal energy from the chemical separation process instead of or in combination with the compressor(s) that may be used exclusively in the refrigeration cycle during non-peak hours. In some configurations, compressor(s) in the refrigeration cycle for the chemical separation process may be larger than required for the chemical separation process such that the compressor(s) may be used both for the chemical-separation refrigeration cycle and for a PCM refrigeration cycle to charge the PCM. In other configurations, one or more separate compressor(s) may be used for a distinct PCM refrigeration cycle that is used when charging the PCM.

According to claim 1, the present application provides a system for storing energy for refrigeration in a chemical separation process of a chemical plant, the system comprises: one or more thermally insulated vessels; a phase change material (PCM) disposed in the thermally insulated vessel(s); a refrigeration cycle of a chemical separation process;
a refrigerant circuit coupled to circulate a refrigerant fluid in thermal communication with the PCM such that the PCM releases thermal energy to the refrigerant fluid at a point in said refrigeration cycle of the chemical separation process that provides refrigeration to the chemical separation process and charges the PCM; where the PCM is configured to transition from an initial state to a lower enthalpy state at a transition temperature that is above a lowermost working temperature at the point in the refrigeration cycle; where the PCM releases at least 10 MWh (e.g., 20 MWh, 30 MWh, 50 MWh, 100 MWh, 150 MWh, 200 MWh, 300 MWh, 500 MWh, 1000 MWh, or more) to transition from the initial state to the lower enthalpy state.

In some configurations of the present systems, the refrigerant circuit is part of a refrigeration system that comprises a compressor configured to compress the refrigerant fluid such that the refrigerant fluid can be circulated to receive thermal energy in the chemical separation process, and the system is configured to either: receive cooled refrigerant fluid from the refrigeration system and circulate the cooled refrigerant fluid through the refrigerant circuit such that the refrigerant fluid absorbs thermal energy from the PCM; or receive warmed refrigerant fluid from the chemical separation process and circulate the warmed refrigerant fluid through the refrigerant circuit such that the PCM absorbs thermal energy from the warmed refrigerant fluid. In some such systems, the refrigerant fluid is a first refrigerant fluid and the refrigerant circuit is a first refrigerant circuit, and the system further comprises: a PCM refrigeration circuit comprising a compressor, and a second refrigerant circuit configured to circulate a second refrigerant fluid in thermal communication with a the PCM such that the second refrigerant fluid absorbs thermal energy from the PCM.

In some configurations of the present systems, the one or more insulated vessels are first insulated vessel(s) and the PCM is a first PCM, and the system further comprises: one or more second insulated vessels; a second phase change material (PCM) disposed in the second thermally insulated vessel(s), the second PCM configured to transition from an initial state to a higher enthalpy state at a second transition temperature that is above the transition temperature of the first PCM; where the second PCM requires at least 10 MWh to transition from the initial state to the higher enthalpy state. In some such configurations, the PCM, the second PCM, or both the first PCM and the second PCM together, requires at least 100 MWh (e.g., 150 MWh, 200 MWh, 300 MWh, 500 MWh, 1000 MWh, or more) to transition from the first state to the second state.

According to claim 12, the present application also provides a method of storing energy for refrigeration in a chemical separation process of a chemical plant, the method comprises: during a discharge cycle, circulating a refrigerant fluid in thermal communication with a phase-change material (PCM) such that the PCM releases thermal energy to the refrigerant fluid at a point in a refrigeration cycle of the chemical separation process that provides refrigeration to the chemical separation process and charges the PCM; where the PCM is configured to transition from an initial state to a lower enthalpy state at a transition temperature that is above a lowermost working temperature of the refrigerant at the point in the refrigeration cycle; and where the PCM releases at least 10 MWh of energy to the refrigerant fluid during a 24-hour period. In some such implementations, the method further comprises: during a recharge cycle, circulating a refrigerant fluid in thermal communication with the PCM such that the refrigerant fluid absorbs thermal energy from the PCM until a majority (e.g., substantially all) of the PCM is in a solid state. In some such implementations, a 24-hour period includes one or more discharge cycles lasting a total 2-22 hours, and one or more recharge cycles lasting a total of 2-22 hours. In some such implementations, the lengths of the charge and discharge cycles are adjusted or selected based on a methodology selected from the group of methodologies consisting of: in response to a request from a power grid operator to reduce consumption of electric power; to reduce the total cost of electricity to continuously run the chemical separation process over the 24-hour period, taking into account variations in the price of electricity over the 24-hour period; and in response to a temporary outage of at least one source of electricity to the chemical separation process.

In some implementations of the present methods, the temperatures at which thermal energy is transferred between the PCM and the refrigerant fluid are selected such that performing the process in combination with the PCM during the discharge cycle requires a Reduced Total Energy, performing the process without the PCM over the same length of time requires a Baseline Total Energy, and charging the PCM during the charge cycle requires a Total Charge Energy in excess of the total energy required to perform the process over the same length of time; and where the equation (Baseline Total Energy - Reduced Total Energy) ÷ Total Charge Energy equals 60% or more.

Some implementations of the present methods further comprise: during the recharge cycle, operating a compressor to simultaneously cool the refrigerant fluid that is circulated in thermal communication with the PCM and refrigerant fluid that is used in a propylene or ethylene refrigeration system for the chemical separation process.

In some configurations of the present systems and implementations of the present methods, the compressor is electric and, optionally, a majority of the electricity to run the compressor(s) is obtained from renewable sources.

In some configurations of the present systems and implementations of the present methods, the PCM comprises one or more component selected from the group of components consisting of: a paraffinic hydrocarbon (e.g., isopentane; n-hexane; 2-methylpentane; 2,3-dimethylbutane; n-octane; 2,3,3-trimethylpentane); an alcohol (e.g., ethylene, glycol, 1-propanol, sec-butanol); polydimethylsiloxane; water; an aqueous salt solution; a water-salt mixture; an organic chemical; a mixture of two or more organic chemicals; a eutectic mixture of two or more organic chemicals; and a mixture of two or more inorganic chemicals. In some such systems and implementations, the PCM comprises a water-salt mixture that comprises one or more components selected from the group of components consisting of: calcium dichloride (CaCl₂); calcium dichloride (CaCl₂); lithium chloride (LiCl); magnesium chloride (MgCl₂); zinc chloride (ZnCl₂); hydrogen chloride (HCl); lithium sulfate (Li₂SO₄); sodium chloride (NaCl); potassium chloride (KCl); aluminum nitrate (Al(NO₃)₃); combinations of any two or more of the foregoing components.

In some configurations of the present systems and implementations of the present methods, the PCM has a melting point of from -170°C to 40°C (e.g., -150°C to 30°C, -120°C to 20°C, -100°C to 10°C, and/or -75°C to 5°C).

In some configurations of the present systems and implementations of the present methods, the refrigerant comprises ethylene, propylene, ethane, propane, butane, ammonia, hydrofluorocarbons, hydrochlorofluorocarbons, or mixtures thereof.

In some configurations of the present systems and implementations of the present methods, the PCM is in a form selected from the group of forms consisting of: a slurry in which the PCM is directly suspended in a liquid within the insulated vessel(s); an encapsulated slurry in which the PCM is encapsulated in casings that are suspended in a liquid within the insulated vessel(s); and a plurality of containers each containing a portion of the slurry and including at least one heat-transfer surface configured to permit thermal communication with the PCM. In some such configurations and implementations, the PCM is in a slurry or encapsulated slurry form and the system is configured to agitate the PCM within the insulated vessel(s).

In some configurations of the present systems and implementations of the present methods, the chemical separation process is selected from the group of chemical separation processes consisting of: a steam cracking process, an ammonia synthesis process, a hydrogen production process, a para-xylene production process, propane dehydrogenation, olefin metathesis, and natural gas processing.

The term "coupled" is defined as connected, although not necessarily directly, and not necessarily mechanically; two items that are "coupled" may be unitary with each other. The terms "a" and "an" are defined as one or more unless this disclosure explicitly requires otherwise. The term "substantially" is defined as largely but not necessarily wholly what is specified (and includes what is specified; e.g., substantially 90 degrees includes 90 degrees and substantially parallel includes parallel), as understood by a person of ordinary skill in the art. In any embodiment of the present apparatuses, kits, and methods, the term "substantially" may be substituted with "within [a percentage] of" what is specified, where the percentage includes 0.1, 1, 5, and/or 10 percent.

The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, an apparatus or kit that "comprises," "has," "includes" or "contains" one or more elements possesses those one or more elements, but is not limited to possessing only those elements. Likewise, a method that "comprises," "has," "includes" or "contains" one or more steps possesses those one or more steps, but is not limited to possessing only those one or more steps.

Further, an apparatus, device or system that is configured in a certain way is configured in at least that way, but it can also be configured in other ways than those specifically described.

Any embodiment of any of the present apparatuses and methods can consist of or consist essentially of - rather than comprise/include/contain/have - any of the described steps, elements, and/or features. Thus, in any of the claims, the term "consisting of" or "consisting essentially of" can be substituted for any of the open-ended linking verbs recited above, in order to change the scope of a given claim from what it would otherwise be using the open-ended linking verb.

Details associated with the embodiments described above and others are presented below.

Some details associated with the aspects of the present disclosure are described above, and others are described below. Other implementations, advantages, and features of the present disclosure will become apparent after review of the entire application, including the Brief Description of the Drawings, Detailed Description, and the Claims.

### BRIEF DESCRIPTION OF THE DRAWINGS

The following drawings illustrate by way of example and not limitation. For the sake of brevity and clarity, every feature of a given structure is not always labeled in every figure in which that structure appears. Identical labels or reference numbers do not necessarily indicate an identical structure. Rather, the same reference number may be used to indicate a similar feature or a feature with similar functionality, as may non-identical reference numbers. Dimensioned figures are drawn to scale (unless otherwise noted), meaning the sizes of the depicted elements are accurate relative to each other for at least the embodiment depicted in the figures.
**FIG. 1** depicts a flowchart of an example of the present methods.
**FIGs. 2A** and **2B****,** respectively, depict a conceptual block diagram of a first example of the present PCM energy storage Systems in combination with a chemical separation process, during charge and discharge cycles.
**FIGs. 3A** and **3B****,** respectively, depict a conceptual block diagram of a second example of the present PCM energy storage systems in combination with a chemical separation process, during charge and discharge cycles.
**FIGs. 4A** and **4B** depict examples of encapsulated PCM configurations.
**FIG. 5** depicts a schematic process diagram of an example of ethylene and propylene refrigeration systems for a Naphtha cracker.
**FIG. 6** depicts a schematic process diagram for a first example of one of the present one-level PCM energy storage systems for the propylene refrigeration system of FIG. 5, during a charge cycle of the PCM energy storage system.
**FIG. 7** depicts a schematic process diagram of the PCM energy storage system of FIG. 6, during a discharge cycle of the PCM energy storage system.
**FIGs. 8A-8B** depict a schematic process diagram for a first example of one of the present three-level PCM energy storage systems for the ethylene and propylene refrigeration systems of FIG. 5, during a charge cycle of the PCM energy storage system.
**FIGs. 9A-9B** depict a schematic process diagram of the PCM energy storage system of FIGs. 8A-8B, during a discharge cycle of the PCM energy storage system.
**FIGs. 10A-10B** depict a schematic process diagram for a second, high-efficiency example of one of the present three-level PCM energy storage systems for the ethylene and propylene refrigeration systems of FIG. 5, during a charge cycle of the PCM energy storage system.
**FIGs. 11A-11B** depict a schematic process diagram of the PCM energy storage system of FIGs. 10A-10B, during a discharge cycle of the PCM energy storage system.
**FIG. 12** depicts a chart showing power demand over a 24-hours day for the PCM energy storage systems of FIGs. 6-11B.
**FIG. 13** depicts a schematic process diagram of an example of an ammonia refrigeration system.
**FIG. 14** depicts a schematic process diagram for a further example of one of the present one-level PCM energy storage systems for the ammonia refrigeration system of FIG. 13, during a charge cycle of the PCM energy storage system.
**FIG. 15** depicts a schematic process diagram of the PCM energy storage system of FIG. 14, during a discharge cycle of the PCM energy storage system.
**FIG. 16** depicts a schematic process diagram for a further example of one of the present one-level PCM energy storage systems for the ammonia refrigeration system of FIG. 13 with the PCM energy storage system configured for asymmetric charge and discharge cycles, during a charge cycle of the PCM energy storage system.

### DETAILED DESCRIPTION

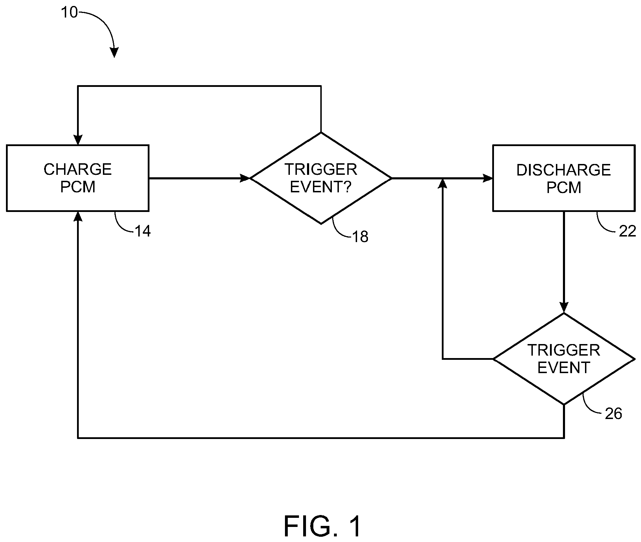

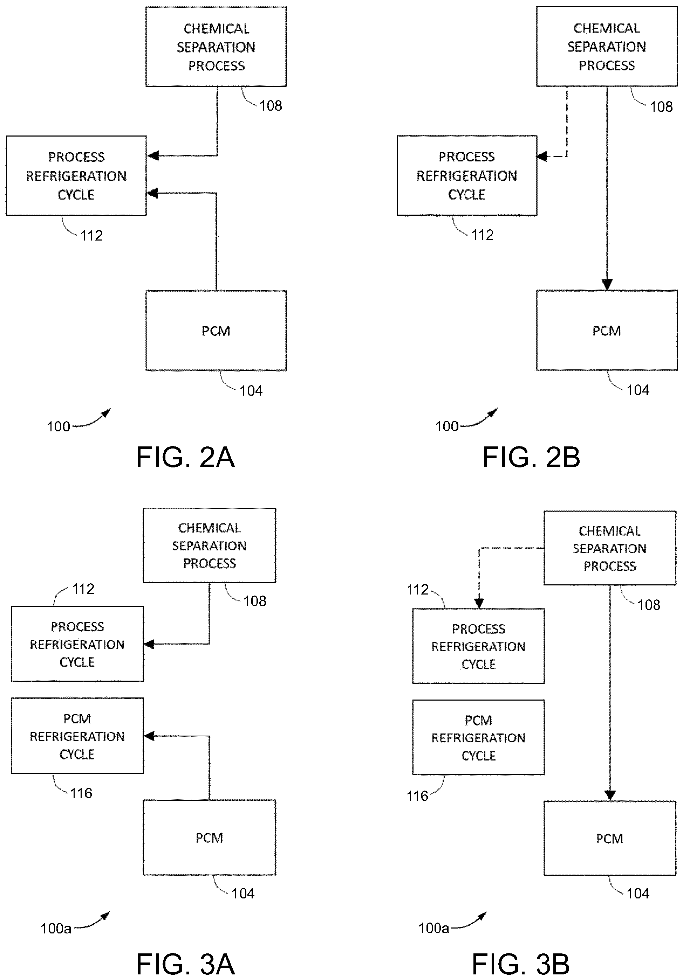

Referring now to the drawings, and more particularly to FIGs. 1 and 2A-2B, FIG. 1 depicts a flowchart of one example 10 of the present methods of using phase change material for a refrigeration cycle in a chemical separation process of a chemical plant, and FIGs. 2A and 2B depict conceptual block diagrams of an example of such PCM energy storage system 100 with PCM 104 in combination with a chemical separation process 108 in a chemical plant during a charge cycle (FIG. 2A) and a discharge cycle (2B). In some implementations, the method or process depicted in FIG. 1 is implemented by a digital controller such as a processor that executes instructions from memory to implement the steps described below with reference to FIG. 1. In the example of FIGs. 2A and 2B, a common refrigeration cycle 112 (e.g., with one or more oversized compressor(s) that is/are larger than otherwise needed for the chemical separation process alone) both provides refrigeration to the chemical separation process 108 and charges the PCM 104.

In an initial step 14, PCM 104 is "charged" by removing thermal energy from the PCM. In at least some implementations, sufficient amounts of thermal energy are removed to solidify at least some of the PCM-i.e., to transition the PCM from a liquid state to a solid state. As indicated by the arrows in FIG. 2A, during charging of the PCM, thermal energy is removed from PCM 104 and from chemical separation process 108 using common refrigeration cycle 112.

At a step 18, the method involves determining whether a discharge trigger event has occurred. Such a discharge trigger event can be or include, for example, reaching a time at which PCM 104 is scheduled to be "discharged" by absorbing thermal energy from chemical separation process 108, receiving a request from an operator of a power grid to reduce power consumption from the grid, observing a significant increase in the instantaneous cost of electrical energy supplied from the grid, a predictive model indicating future significant increase in the cost of electrical energy, or detecting an interruption of power from the grid or from local sources (e.g., renewable sources or combustion of fossil fuels). If a discharge trigger event has not occurred, then the process may include determining whether the PCM is fully charged and, if not, reverting to step 14 to continue charging the PCM. In some implementations, the process includes adjusting the rate at which the PCM is charged (i.e., the rate at which thermal energy is removed from the PCM) based on the level of "charge" of the PCM. For example, the rate at which thermal energy is removed from the PCM may be slowed as the PCM approaches a fully charged state. In some implementations, if the PCM is fully charged, then the solidified or "charged" state of the PCM is maintained by continuing to remove thermal energy from the PCM at a rate approximating the rate at which the PCM absorbs thermal energy from environmental sources (e.g., due to inherent limitations of thermal insulation).

If instead a discharge trigger even has occurred, the method proceeds to a step 22 at which the PCM is discharged via absorption of thermal energy from the chemical separation process (e.g., via a refrigerant that is circulated in thermal communication with the chemical separation process and with the PCM). As indicated by the solid arrow in FIG. 2B, thermal energy from PCM in 104 is used for process refrigeration in 108. The dashed arrow in FIG. 1B is optional and indicates that additional process refrigeration for 108 can be provided by refrigeration cycle 112 operating at reduced load. Refrigeration cycle 112 can, in at least some instances or implementations, be shut down entirely such that all refrigeration for the chemical separation process is provided via the PCM's absorption of thermal energy from the chemical separation process. In some implementations, such transfer of thermal energy from the chemical separation process to the PCM can be direct (e.g., passing a fluid of the chemical separation process in direct thermal communication with the PCM) or indirect (e.g., passing the fluid of the chemical separation of process in thermal communication with a heat-transfer fluid that is, in turn, passed in direct thermal communication with the PCM). In this context, "direct thermal communication" means that there is not an intervening heat-transfer fluid, and does not preclude thermal communication through intervening physical structures such as, for example, conduits for directing flow of process or heat-transfer fluids or through the walls of containers in which the PCM is disposed.

At a step 26, the method involves determining whether a charge trigger event has occurred. Such a charge trigger even can be or include, for example, reaching a time at which PCM 104 is scheduled to be "charged" by removing thermal energy from the PCM, receiving a an indication from an operator of a power grid that higher power consumption from the grid can be resumed or the expiration of a period during which the operator requested reduced power consumption, observing a significant decrease in the instantaneous cost of electrical energy supplied from the grid, a predictive model indicating future significant decrease in the cost of electrical energy, or detecting the resumed availability of power from the grid or from local sources (e.g., renewable sources or combustion of fossil fuels). If a charge trigger event has not occurred, then the process may include determining whether the PCM is fully discharged and, if not, reverting to step 22 to continue discharging the PCM. In some implementations, when sufficient power is available (even if at a higher price), the process includes operating the compressor(s) of refrigeration cycle 112 at a reduced rate (relative to full or desired rate when running the chemical separation process and charging the PCM at a full or desired rate) to remove thermal energy from chemical separation process 108, from PCM 104, or from both the chemical separation process and the PCM based (as indicated by the dashed arrows in FIG. 2B), for example, on the level of "charge" of the PCM and/or on the amount or cost of power available from the grid or other sources. For example, the rate at which thermal energy is absorbed by the PCM may be slowed as the PCM approaches a fully discharged state. In some implementations, if the PCM is fully discharged and power is available from other sources (even if at a higher price), then the process refrigeration cycle is operated solely to run the chemical separation process without charging the PCM. If a charge trigger event has occurred and sufficient power is available from the grid or other sources, then the method reverts to step 14 at which the PCM is charged, either at a full or desired charging rate; or, if more power is available than is needed to run the chemical separation process but not enough power to also charge the PCM at the full or desired charging rate, then the PCM is charged at a reduced rate (relative to a full or desired charging rate).

FIGs. 3A and 3B, respectively, depict a conceptual block diagram of an alternate configuration 100a of the present PCM energy storage systems in combination with a chemical separation process, during charge and discharge cycles. The operation of configuration 100a is substantially similar to that of configuration 100 (FIGs. 2A-2B), with the primary exception being that configuration 100a includes an additional PCM refrigeration cycle 116 with its own compressor(s). As such, at step 14 of the method depicted in FIG. 1, process refrigeration cycle 112 removes thermal energy from chemical separation process 108, and PCM refrigeration cycle 116 removes thermal energy from PCM 104 to charge the PCM. Likewise, at step 22 of the method depicted in FIG. 1, the PCM is discharged via absorption of thermal energy from the chemical separation process 108, as indicated by the solid arrow in FIG. 3B. Additional process refrigeration may optionally be provided by the process refrigeration cycle 112 as indicated by the dashed line in FIG. 3B. Process refrigeration cycle 112 and PCM refrigeration cycle 116 can, in at least some instances or implementations, be shut down entirely such that all refrigeration for the chemical separation process is provided via the PCM's absorption of thermal energy from the chemical separation process and such that thermal energy is not simultaneously being removed from the PCM. As described above for configuration 100 of FIGs. 2A-2B, in some implementations, such transfer of thermal energy from the chemical separation process to the PCM can be direct (e.g., passing a fluid of the chemical separation process in direct thermal communication with the PCM) or indirect (e.g., passing the fluid of the chemical separation of process in thermal communication with a heat-transfer fluid that is, in turn, passed in direct thermal communication with the PCM).

As described above for configuration 100 of FIGs. 2A-2B, for configuration of 100a, in some implementations, when sufficient power is available (even if at a higher price), the method includes operating the compressor(s) of process refrigeration cycle 112 at a reduced rate (relative to full or desired rate when running the chemical separation process solely with the process refrigeration cycle) to remove thermal energy from chemical separation process 108, operating the compressor(s) of PCM refrigeration cycle 116 at a reduced rate (relative to full or desired rate when charging the PCM at a full or desired rate) to remove thermal energy from PCM 104, and/or both running the compressor(s) of the process refrigeration cycle at a reduced rate and running the compressor(s) of the PCM refrigeration cycle at a reduced rate (as indicated by the dashed arrows in FIG. 3B). In some implementations, if the PCM is fully discharged and power is available from other sources (even if at a higher price), then only the compressor(s) of process refrigeration cycle 112 is operated to run the chemical separation process without running the compressor(s) of PCM refrigeration cycle 116 to charge the PCM.

While the process example of FIG. 1, and the system examples of FIGs. 2A-2B and 3A-3B utilize a single PCM, the present methods and system can include multiple PCMs (e.g., at different temperatures) and multiple refrigeration cycles, for example, two PCMs with different freezing temperatures, or three PCMs with three different freezing temperatures, for example to provide staged cooling for a process refrigeration cycle.

### Phase Change Material (PCM)

Phase change materials generally have the ability to absorb or release (preferably large) quantities of heat at specifically targeted temperatures of interest and, for at least some implementations the present systems and methods, preferably with minimal volumetric change. Generally, physical phase transitions of condensed phase materials exhibit this type of behavior. A transition from the solid phase to the liquid phase is one type of transition that typically meets this criteria. However, other transitions can also be utilized in certain implementations of the present systems and methods. For example, some PCMs may change from a solid state to a liquid state in the operating conditions (e.g., temperature) of certain implementations. By way of further example, some PCMs may exhibit other types of phase changes in which the enthalpy changes non-linearly at a particular temperature (or over a particular temperature range), such as from one solid state to another solid state (e.g. change in crystal structure due to molecular rearrangements), from an amorphous state to a solid state, from a gel state to a solid state, from a liquid state to a gel state, or from an amorphous state to a different amorphous state. In a multicomponent mixture, there may or may not also be some compositional shift between one state and another, for example a liquid solution of a solvent and a solute forming a 2:1 solvent and solute compound in the solid phase. To generally describe this without enumerating all the specific phases of the many possible systems, the PCM can be described as transitioning between a first state and a second state when heat is added to the PCM and transitioning from the second state to the lower-enthalpy first state when heat is removed from the PCM.

Various materials and mixtures can be used for the PCM, such as, for example, a paraffinic hydrocarbon (e.g., pentane; n-hexane; 2-methylpentane; 2,3 dimethylbutane; n-octane; 2,3,3 trimethylpentane), an alcohol (e.g., ethylene glycol; 1-propanol; sec-butanol; ethanol, isopropyl alcohol), polydimethylsiloxane, water, an aqueous salt solution, a eutectic salt solution, a eutectic mixture of two or more organic or inorganic chemicals and/or combinations thereof (e.g., a combination of two paraffinic hydrocarbons, a combination of two alcohols, a combination of an alcohol and an aqueous salt). Various salts can be used in a salt solution, such as, for example, calcium dichloride (CaCl₂); lithium chloride (LiCl), magnesium chloride (MgCl₂), zinc chloride (ZnCl₂), hydrogen chloride (HCl), lithium sulfate (Li₂SO₄), sodium chloride (NaCl), potassium chloride (KCl), aluminum nitrate (Al(NO₃)₃), various commercially available eutectic salt solutions (e.g., E-65 available from PCM Products Ltd., Cambridgeshire, UK), and combinations thereof. Moreover, different PCM components can be mixed in proportions to achieve a desired freezing point for a given refrigeration cycle. For example, the refrigeration system for a C2 splitter and de-ethanizer in a naphtha cracker typically operates over a temperature range from about -42°C to about 0°C, for which a PCM could be a eutectic salt mixture with a transition temperature of -65°C. By way of further example, the de-methanizer in a naphtha cracker typically operates over a lower temperature range with a lower end of about -100°C, so a PCM with a lower phase transition would be needed, for example pure ethanol (-114°C) or a eutectic mixture of ethanol and water (-118°C) or ethanol and another alcohol such as methanol.

There are several options for containment of a PCM in the present systems and methods. First, PCM can be disposed in one or more insulated vessels through which heat-exchange conduits define flowpaths for refrigerant. The conduits (e.g., tubes, shells, fins, or the link) disposed within the vessel(s) permit heat transfer between the refrigerant within the conduits or heat exchangers and the PCM within a given vessel (outside the conduits). In at least some configurations, the PCM is stirred or agitated within the vessel(s) to prevent temperature gradients and improve the heat transfer. In this first option, the volume of PCM typically will include more than the minimum needed for a desired thermal capacity, because a consistent liquid phase will typically be required to facilitate stirring or agitation during "charging" of the PCM to facilitate the consistent transfer of thermal energy out of the PCM. For example, the PCM can be suspended in a liquid (i.e., a slurry when the PCM is in a solid form). The relative proportions of liquid and solid can be designed according to the system needs. For example a relatively large, passive storage system may have continuous and somewhat separated solid and liquid phases. The stirring or agitation system can be configured to control the PCM in a slurry of smaller particles that is easily pumped and transferred to heat transfer equipment, or simply suspended by fluid circulation to homogenize the system with heat storage capacity. In some implementations, the PCM may be present in the form of small, encapsulated beads that contain the PCM in both its liquid and solid states, such that the beads can be suspended in a liquid with a lower freezing point than the PCM. When the PCM is suspended as a slurry in a solution or as an emulsion (e.g., n-decane in water/ethylene glycol (CH₂(OH)-CH₂(OH)) solution), without the PCM being encapsulated, nucleating agents may be included in the liquid to encourage nucleation during freezing to occur in the solution rather than on heat-transfer surfaces where nucleation can interfere with or inhibit the transfer of thermal energy through those surfaces. Some such systems and methods may include supercooling or subcooling before nucleation/crystallization occurs. For example, liquid solutions can sometimes be cooled below their freezing point without solidifying in the absence of a nucleating reaction to form crystals, in which case nucleating agents can be introduced and/or the liquid can be agitated to begin the nucleation process and thereby solidify the liquid.

A second option includes containing the PCM in a larger number of relatively smaller, insulated containers (e.g., formed of HDPE). These containers can be shaped, either individually or in combination with other such containers, to contour to and contact refrigerant conduits to improve heat transfer between the refrigerant and the PCM. For example, with conduits having a circular cross-section like a typical pipe, the containers can include circular passages or semi-circular indentations to contact the conduit. By way of further example, conduits can be shaped to have a relatively flat, rectangular cross-section sized to fit against a planar wall of a container.

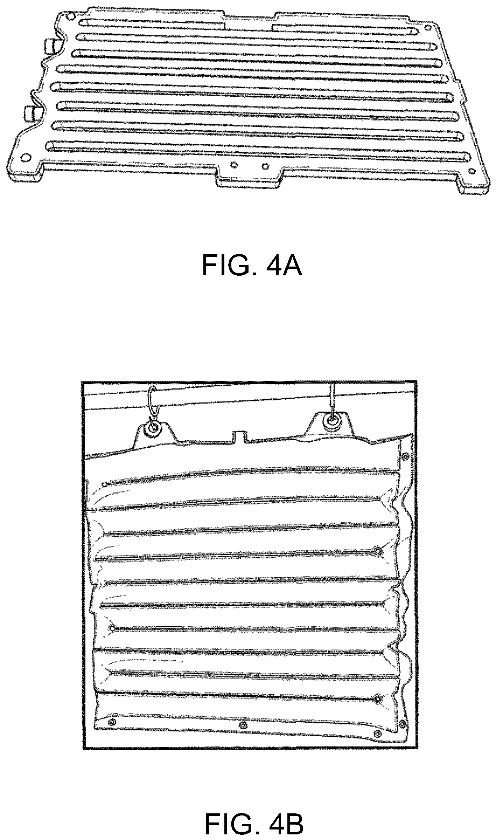

In a third option, the PCM can be contained in multiple plastic or metal enclosures the geometry of which is selected such that these may be stacked or hung (e.g., in parallel) inside the insulated vessel such that the refrigerant or heat transfer fluid (when a secondary circuit system is employed) can pass between (and/or through) and in contact with the individual containers to transfer thermal energy between the PCM and the refrigerant or heat-transfer fluid through the walls of the containers. This approach provides a large surface area for the transfer of thermal energy. FIG. 4A depicts an example of such a container that is formed of polymer and is substantially rigid to allow multiple containers to be stacked. As shown, the container of FIG. 4A defines a number of grooves to maximize the surface area available for the transfer of thermal energy between the PCM inside the container and the refrigerant or heat-transfer fluid outside the container. FIG. 4B depicts another example of such a container that is formed from a polymer and is flexible (like a plastic kitchen bag). As shown, the container of FIG. 4B also defines a number of grooves along which the two sides of the bag structure are joined to define an elongated zig-zag passage to maximize surface area for heat-transfer, provide for ease of bag filling, and to promote even distribution of PCM within the bag structure when the bag structure is hanging in a vessel through which the refrigerant or heat-transfer fluid circulates.

The first of these three PCM-containment options has the advantage of smaller overall vessel size, simpler construction, and higher heat transfer rates. The second of these three PCM-containment options offers lower corrosion rates by fully containing the refrigerant in conduits and fully containing the PCM in individual containers. And the third of these three PCM-containment options offers advantages of a large heat exchange area in a conveniently-handled form factor. In some implementations with a single PCM, the PCM can be configured to require at least 10 MWh (e.g., 20 MWh, 30 MWh, 50 MWh, 100 MWh, 150 MWh, 200 MWh, 300 MWh, 500 MWh, 1000 MWh, or more) to transition from the initial state to the higher enthalpy state. In other implementations with multiple PCMs, the PCMs can be configured to together require at least 100 MWh (e.g., 150 MWh, 200 MWh, 300 MWh, 500 MWh, 1000 MWh, or more) to transition from the initial state to the higher enthalpy state.

### Refrigerants

Various refrigerants can be used for chemical separation process refrigeration and/or PCM charging. Examples of refrigerants that are suitable for certain implementations of the present methods and systems include ethylene, propylene, ethane, propane, butane, ammonia, hydroflourocarbons, hydrochloroflourocarbons, and mixtures thereof. As will be appreciated by those of ordinary skill in the art, a refrigerant for a given refrigeration cycle can include one or more components selected such that the refrigerant will be in a gaseous state at an upper temperature of the refrigeration cycle and will be in a liquid state at a lower temperature of the refrigeration cycle.

### Heat Transfer Fluid

For configurations in which a heat transfer fluid indirectly transfers thermal energy between the PCM and the refrigerant of a given chemical-separation refrigeration cycle, the heat transfer fluid can include one or more of any components known for such heat-transfer fluids. Suitable heat transfer fluids remain in the liquid phase under the conditions of both the relevant part of the refrigeration cycle and the conditions under which heat transfer occurs between the heat-transfer fluid and the PCM. For example, diethyl ether (which freezes at 154 +/- 7 K and, at atmospheric pressure, boils at 307.7 +/-0.2 K) is a suitable heat transfer fluid for use with a typical de-methanizer refrigeration system.

### EXAMPLES

### Examples 1-3: Naphtha Cracker Refrigeration Systems

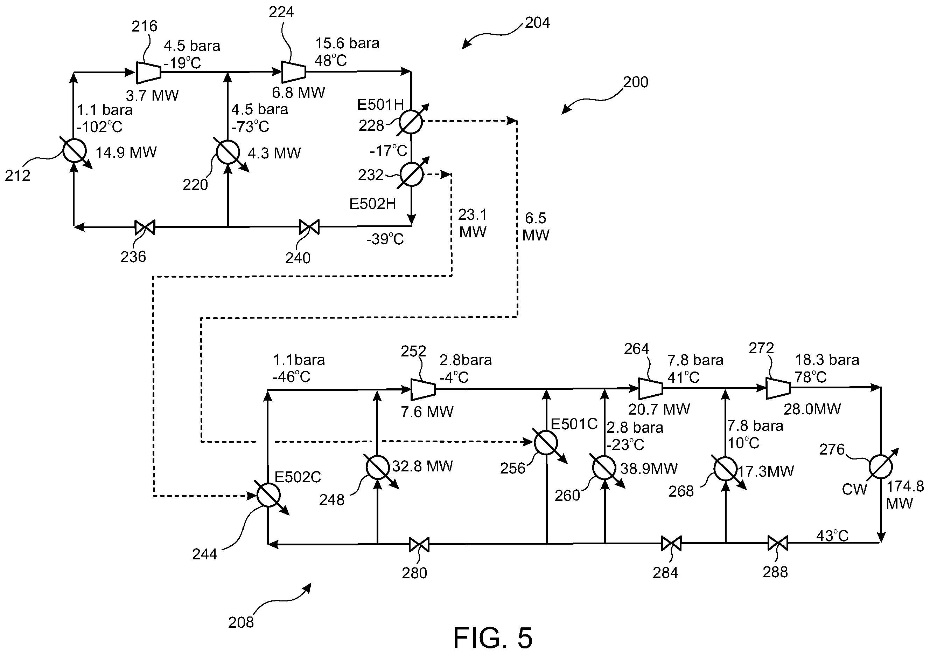

Several examples were modeled for the use of the present PCM energy storage systems and methods to run refrigeration cycles for ethylene production via Naphtha crackers, particularly Naphtha crackers utilizing a front-end demethanizer configuration. FIG. 5 depicts an example 200 of a refrigeration system for a Naphtha cracker and, more specifically, depicts a schematic process diagram of that example that includes an ethylene refrigeration system 204 and a propylene refrigeration system 208 for the Naphtha Cracker. The refrigeration systems in the examples provide several different temperature levels for process chilling duties in various portions of the Naphtha Cracker.

The typical or "existing" ethylene refrigeration system 204 includes a first compressing stage with a first evaporator 212 and a first compressor 216, a second compressing stage with a second evaporator 220 and a second compressor 224, and a single condensing stage with a first condenser 228 and a second condenser 232. The pressure of the condensed ethylene is let down across valves 240 and 236, which reduces the boiling point of the ethylene such that cooling may be obtained. Valve 240 lets the pressure down to about 4.5 bara which results in a mixture of vapor and liquid boiling at about -73°C. Valve 236 lets the pressure down to about 1.1 bara which results in a mixture of vapor and liquid boiling at about -102°C. In operation, a portion of the ethylene from valve 240 is sent to second evaporator 220 and the ethylene from valve 236 is sent to first evaporator 212. In first evaporator 212, the liquid phase ethylene absorbs thermal energy and boils to a gaseous state at a temperature of -102°C and a pressure of 1.1 bara. The gaseous ethylene from first evaporator 212 is then routed to first compressor 216 where the gaseous ethylene is compressed to a first pressure of 4.5 bara (Bar absolute). In second evaporator 220, the liquid phase ethylene absorbs thermal energy and boils to a gaseous state at a temperature of -73°C and a pressure of 4.5 bara. The gaseous ethylene from second evaporator 220 is then mixed with the compressed ethylene from first compressor 216, and the combined gaseous ethylene is then routed to second compressor 224, where the combined gaseous ethylene is further compressed to a second pressure of 15.6 bara. The compressed gaseous ethylene from second compressor 224 is then routed to the condensers, where it is partially condensed in first condenser 228 and then further condensed in second condenser 232. In the depicted configuration, a heat transfer fluid is circulated through the first condenser 228 to absorb thermal energy from the condensing ethylene for use in the propylene refrigeration system, and a heat-transfer fluid is also circulated through the second condenser 232 to absorb additional thermal energy from the condensing ethylene also for use in the propylene refrigeration system.

The typical or "existing" propylene refrigeration system 208 includes three compressor stages and a condenser stage. The first compressing stage includes a first evaporator 244, parallel second evaporator 248, and a first compressor 252. The second compressing stage includes a third evaporator 256, a parallel fourth evaporator 260, and a second compressor 264. The third compressing stage includes a fifth evaporator 268 and a third compressor 272. The condenser stage includes a single condenser 276. In operation, the pressure of the condensed propylene from condenser 276 is let down to three different pressure levels via valves 288, 284, and 280, which reduces the boiling point of the propylene and is thus able to provide cooling to the process. Upon pressure letdown, a mixture of vapor and liquid is obtained at a temperature determined by the boiling point at the letdown pressure. These mixtures are routed to the evaporators 244, 248, 256, 260, 268 of the first, second, and third compressing stages. In first and second evaporators 244, 248, the liquid phase propylene absorbs thermal energy and boils to a gaseous state at a temperature of -46°C and a pressure of 1.1 bara. As indicated by the dashed line from first condenser 228 of ethylene refrigeration system 204, thermal energy from that first condenser 228 is used as a source of thermal energy in evaporator 256 to boil the propylene. The gaseous propylene is then routed to first compressor 252 where the gaseous propylene is compressed to a first pressure of 4.5 bara and a temperature of -46°C. In third and fourth evaporators 256, 260, the liquid phase propylene absorbs thermal energy and boils to a gaseous state at a temperature of -23°C and a pressure of 2.8 bara. As indicated by the dashed line from second condenser 232 of ethylene refrigeration system 204, thermal energy from that second condenser 232 is used as a source of thermal energy in evaporator 244 to boil the propylene. This gaseous propylene from evaporators 256, 260 is then mixed with the compressed propylene from first compressor 252, and the combined gaseous propylene is then routed to second compressor 264, where the combined gaseous propylene is further compressed to a second pressure of 7.8 bara and temperature of 41°C. In fifth evaporator 268, the liquid phase propylene absorbs thermal energy and boils to a gaseous state at a temperature of 10°C and a pressure of 7.8 bara. This gaseous propylene from evaporator 268 is then mixed with the compressed propylene from second compressor 264, and the combined gaseous propylene is then routed to third compressor 272, where the combined gaseous propylene is further compressed to a third pressure of 18.3 bara. The compressed gaseous propylene from third compressor 272 is then routed to condenser 276, where it is condensed. In normal operation valves 280, 284, and 288 are used to let down the pressure of the flowing propylene. During operation utilizing PCM for discharging, these valves may also be used to shut off flow or propylene. A first valve 280 can be closed to prevent the flow of propylene to first and second evaporators 244, 248; a second valve 284 can be closed to prevent the flow of propylene to any of third and fourth evaporators 256, 260 or first and second evaporators 244, 248; and a third valve 288 can be closed to prevent the flow of propylene to any of fifth evaporator 268, third and fourth evaporators 256, 260, or first and second evaporators 244, 248.

As described above, the three modeled systems are "charged" by freezing the PCM by transferring thermal energy from the PCM to a refrigerant to freeze the PCM and boil the refrigerant, and the systems are "discharged" by transferring thermal energy from the refrigerant in a gaseous state to condense the refrigerant and melt the PCM to a liquid state. For example, the PCM for these modeled examples assume an aqueous eutectic salt mixture that undergoes a liquid-solid phase change at a single temperature.

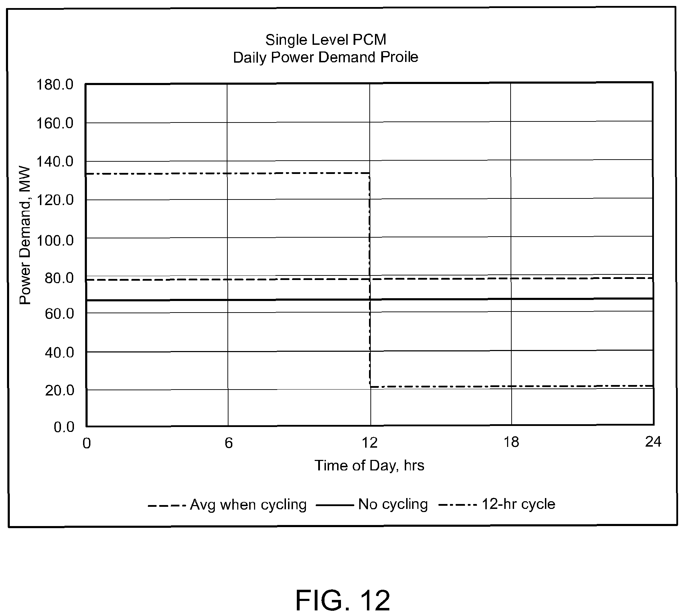

In each of these three examples, the process is modeled with a "symmetric" cycle in which the cycle for "charging" is equal in length of time to the cycle for "discharging" the PCM. For example, the PCM can be "charged" for 12 hours, and "discharged" for 12 hours during each 24 hour period, as shown in FIG. 12. Absorption of thermal energy from external (e.g., ambient) sources was not accounted for (assumed to be zero). In design of a real-world system, such external thermal energy can be accommodated by oversizing thermal capacity of PCM volume and compressor(s), taking into account particular insulation values. These models assumed the PCM to be directly dispersed in a slurry or encapsulated in small spheres within a slurry. Process simulations were performed in CHEMCAD, using the SRK method.

In each of Examples 1 and 2, the respective system is modeled with compressors in the propylene refrigeration system providing additional compression within that refrigeration system to charge the PCM. Such compressors can, for example, be enlarged when converting an existing system to operate using the present PCM energy storage systems, or can simply be sized large enough to provide such additional compression when developing a new system. In Example 3, the system is modeled with (relative to the system without the added PCM system) an additional refrigeration train or circuit with independent compressors for "charging" each PCM reservoir. The PCM refrigeration circuit or train is used only for "charging" the system when surplus power is available. In all of these three examples, the existing refrigeration trains that interact with the PCM system are modified with new exchangers to transfer thermal energy to the PCM for condensing propylene vapor. These three systems were also modeled assuming the existing refrigeration train would be, or would be modified to be, driven by electric drivers (as opposed to burning fossil fuels), and assuming that the added PCM refrigeration train would also be driven by electric drivers.

The single-level or single-stage system of Example 1 uses a single PCM reservoir to store "cold" during periods of surplus or lower-cost power, and then that stored "cold" is utilized when power supply is short or available at a higher cost. This single-level system is the simplest and therefore the lowest cost to construct (relative to the multi-stage systems of Examples 2-3).

As will be appreciated by those of ordinary skill in the art, the selection of charging temperatures (pressures) can impact efficiency of the energy storage; however, for simplicity, Examples 1 and 2 assumed the charging train would operate at same temperature and pressure levels as the existing train without the PCM. In Example 3, efficiency was significantly improved by selecting charging train operating pressures to reduce temperature differences, as discussed in more detail below.

Modeling revealed that a three-level PCM system with three PCM reservoirs would be needed for maximum power cycling, and to enable shutting down the propylene compressors during discharging, as discussed in more detail below with reference to Examples 2 and 3.

### Example 1: One-Level PCM System for Naphtha Cracker Ethylene & Propylene Refrigeration Systems

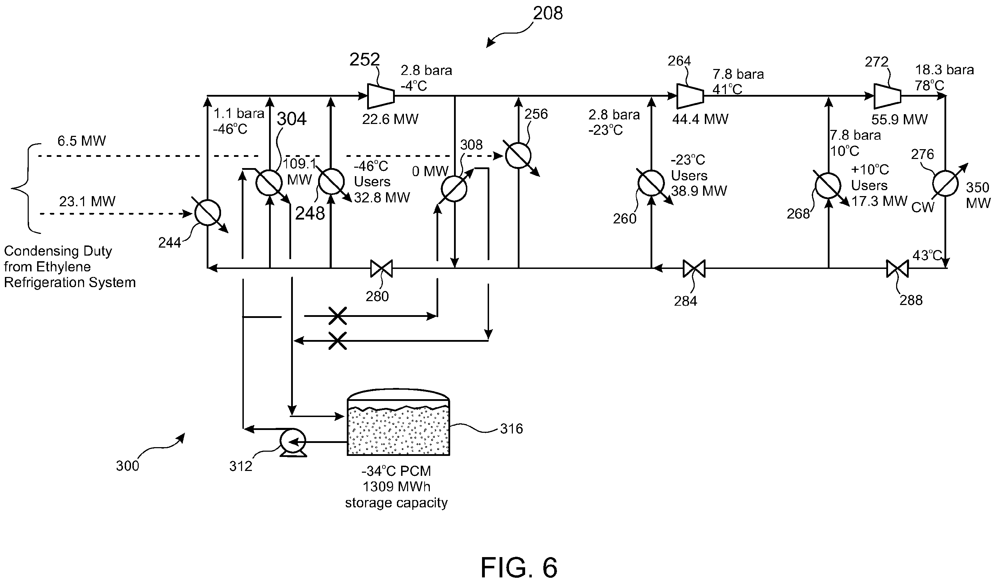

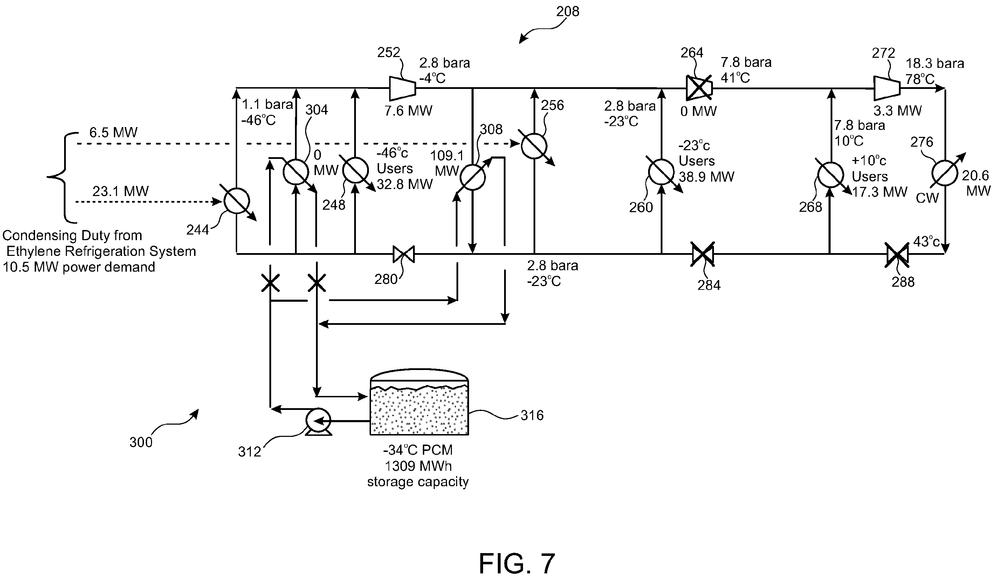

FIG. 6 depicts a schematic process diagram for the modeled example of a one-level PCM energy storage system 300 for propylene refrigeration system 208 of FIG. 5, during a charge cycle of the PCM energy storage system, and FIG. 7 shows PCM energy storage system 300 during a discharge cycle. As shown, the addition of the PCM system includes adding a PCM system evaporator 304 to the first compression stage of propylene refrigeration system 208, with first PCM system evaporator 304 in parallel with first and second evaporators 244, 248; and adding a PCM system condenser 308 to the second compression stage of propylene refrigeration system 208, with PCM system condenser 308 in parallel with third and fourth evaporators 256, 260. The addition of the PCM system also includes a pump 312 and a PCM reservoir 316 and conduits and valves to route a heat-transfer fluid from the PCM to the PCM system evaporator and condenser.

As shown in FIG. 6, during charging of PCM reservoir 316, a PCM slurry or a heat transfer fluid is circulated by pump 312 from PCM reservoir 316 to evaporator 304, where thermal energy is transferred from the PCM slurry or heat-transfer fluid to the propylene at a temperature of -46°C to boil the propylene. In the case where a heat transfer fluid is utilized, heat-transfer fluid then returns to PCM 316 where the heat-transfer fluid absorbs additional thermal energy from the PCM reservoir at the PCM's freezing point of -34°C, and so on, until the PCM is fully "charged" or solidified or charging is otherwise suspended. In the case where the PCM is contained in a slurry, the PCM "charges" or solidifies as it is chilled and returns to the PCM reservoir, eventually resulting in a fully charged slurry of PCM in the reservoir. At the modeled charging rate, evaporator 304 removes thermal energy from the PCM slurry or heat-transfer fluid at a rate of 109.1 MW, such that during a 12-hour charging period, 1309 MWh of energy is removed from PCM 316 reservoir. Stated another way, 1309 MWh of cold or thermal capacity is "stored" such that the PCM reservoir can later absorb up to 1309 MWh (less any inefficiencies, e.g., introduced by absorption of thermal energy from external sources) of thermal energy from the propylene refrigeration system when the PCM reservoir is "discharged." As indicated by the differences between FIG. 5 and FIG. 6, the compressors are required to input additional energy to provide the required compression to "charge" the PCM reservoir. Specifically, first compressor 252 increases from 7.6 MW (FIG. 5) to 22.6 MW (FIG. 6), second compressor 264 increases from 20.7 MW to 44.4 MW, and third compressor 272 increases from 28.0 MW to 55.9 MW. Overall, the power demand for the compressors increases from 66.8 MW for the ethylene and propylene refrigeration systems 204 and 208 alone (FIG. 5) to 133.4 MW for the propylene refrigeration system 208 in combination with the PCM energy storage system 300 (FIG. 6).

As shown in FIG. 7, during discharging of PCM reservoir 316, a PCM slurry or a heat transfer fluid is circulated by pump 312 from PCM reservoir 316 to condenser 308, where thermal energy is transferred from the propylene vapor to the PCM slurry or heat-transfer fluid at a temperature of -23°C to condense the propylene at a pressure of 2.8 bar. The condensation of propylene vapors in condenser 308 occurs simultaneously with the evaporation of propylene liquid in evaporator 256. These flows can be achieved at essentially the same pressure due to a thermosiphon effect, where the boiling liquid in evaporator 256 reduces the density of the fluid providing a driving force for the liquid condensed in condenser 308 to take its place. Alternatively, the propylene can be pumped through a conduit that is in thermal communication with the PCM slurry (e.g., a conduit passing through a container in which the PCM slurry is disposed. The PCM slurry or heat-transfer fluid then returns to PCM 316 where the PCM reservoir absorbs thermal energy from PCM slurry or heat-transfer fluid at the PCM's freezing point of -34°C, and so on, until the PCM is fully "discharged" or liquefied, or discharging is otherwise suspended. As indicated by the differences between FIG. 5 and FIG. 7, the compressors are required to input less energy to provide the required compression to operate propylene refrigeration system 208. Specifically, first compressor 252 stays the same at 7.6 MW (FIGs. 5, 7), second compressor 264 decreases from 20.7 MW to 0 MW, and third compressor 272 decreases from 28.0 MW to 3.3 MW. In the embodiment of FIG 7, two "X"s are shown to indicate that the propylene refrigeration cycles can essentially be operated as two independent cycles; a low pressure cycle where 2.8 bar propylene is condensed using stored PCM in 308, and a high pressure cycle where 18.3 bar propylene is condensed with ambient cooling in 276. Overall, the power demand for these compressors decreases from 66.8 MW for the propylene refrigeration system 208 alone (FIG. 5) to 21.4 MW for the propylene refrigeration system 208 in combination with the PCM energy storage system 300 (FIG. 7). In other implementations, it may be beneficial to maintain at least a nominal load on the second compressor (264).

Table 1 summarizes the condenser power inputs during operation of the ethylene and propylene refrigeration systems, both alone and in combination with the PCM energy storage system in its charging cycle and discharging cycle:

**Table 1: Power Inputs & Outputs for One-Level PCM System**

| | | | Single-level PCM | | |
|---|---|---|---|---|---|
| | | | No Cycling | Charging Cycle | Discharging Cycle |
| Base Refrig Train - Shaft Power, MW | | | | | |
| | Ethylene stage 1 | | 3.7 | 3.7 | 3.7 |
| | Ethylene stage 2 | | 6.8 | 6.8 | 6.8 |
| | Propylene stage 1 | | 7.6 | 7.6 | 7.6 |
| | Propylene stage 2 | | 20.7 | 20.7 | 0 |
| | Propylene Stage 3 | | 28.0 | 28.0 | 3.3 |
| Base train shaft power, MW | | | 66.8 | 66.8 | 21.4 |
| | | | | | |

| Charging Train - Shaft Power, MW | | | | | |
|---|---|---|---|---|---|
| | Ethylene stage 2 | | N/A | N/A | N/A |
| | Propylene stage 1 | | 0.0 | 15.0 | 0.0 |
| | Propylene stage 2 | | 0.0 | 23.7 | 0.0 |
| | Propylene Stage 3 | | 0.0 | 27.9 | 0.0 |
| | | Charging train shaft power, MW | 0.0 | 66.6 | 0.0 |
| | | | | | |
| | | Total refrig train shaft power, MW | 66.8 | 133.4 | 21.4 |
| | | Added energy during charging, MW | 66.6 | | |
| | | Energy reduction during discharging, MW | 45.4 | | |
| | | Efficiency of power storage | 68.2% | | |
| | | Power stored over 24 hour cycle, MWh | 545 | | |

In battery terms, the additional 66.6 MW of power used over the 12-hour charge period (799 MWh) to charge a thermal "battery," then during discharge reduces the amount of power required to run the refrigeration system 200 by 45.4 MW over the 12-hour discharge period (545 MWh), resulting in an efficiency of 68.2%. The efficiency is reduced at least in part by the modeled temperature spread of 23°C between the charging temperature of -46°C at evaporator 304 and the discharging temperature of -23°C at condenser 308. In other implementations, that efficiency can be improved by reducing the magnitude of that temperature spread.

For heat to flow from the PCM to the refrigeration system during charging or from the refrigeration system to the PCM during discharging, there has to be a temperature difference. The temperature difference can be characterized in different ways, such as the difference in temperature between two points of different physical location or an average temperature difference among sets of points that lie within the domain of the PCM volume from sets of points that lie within the domain of the refrigeration system. Similarly, there must be a temperature difference between the manufactured product process and the refrigeration system. In heat transfer applications, the log-mean temperature difference is commonly known and used in many analyses. Sufficient temperature difference or gradient is required even within the PCM volume to transfer the required amount of heat out (and subsequently in) during an operating cycle. Additional temperature gradient may be needed to account for the size of the PCM volume, the heat transfer area in contact with the PCM, or in the case of encapsulated PCM heat transfer through the container wall. For example, while a conventional refrigeration system requires only few degrees between the refrigerant and the process, a log mean temperature difference of 3°C, 5°C, 9°C, or more would account for heat flux into the inner region of domain of the PCM. Other considerations for the temperature driving force include providing for sufficient crystallization kinetic rates in solidifying the PCM or crystal nucleation rate for operating a charging cycle near saturation when few crystals are present. The temperature difference can be managed by designing the amount of heat transfer area that accesses the PCM surface.

### Example 2: Three-Level PCM System for Naphtha Cracker Ethylene & Propylene Refrigeration Systems

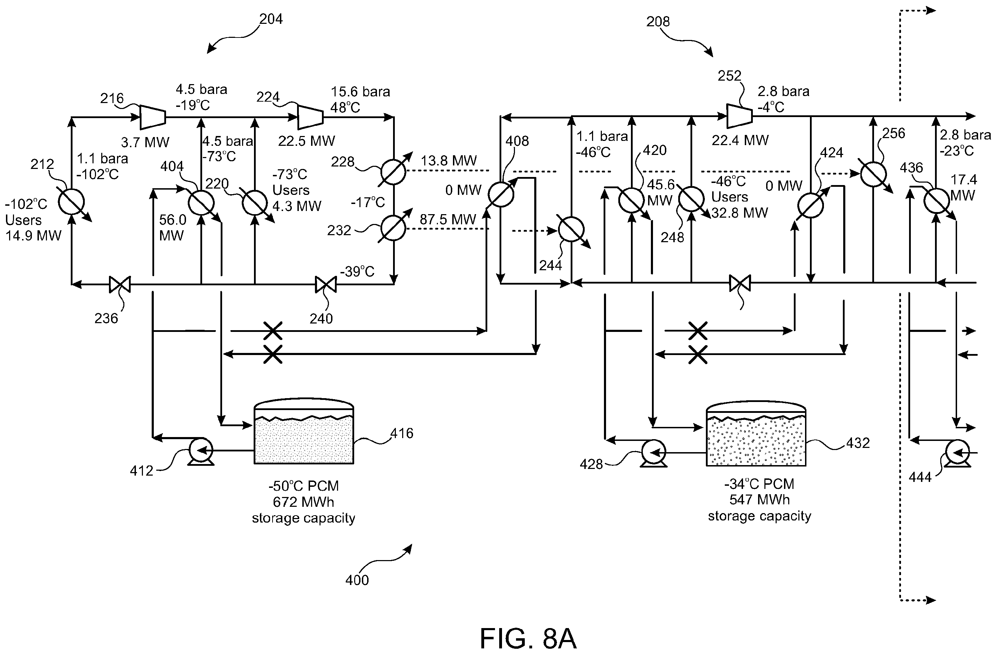

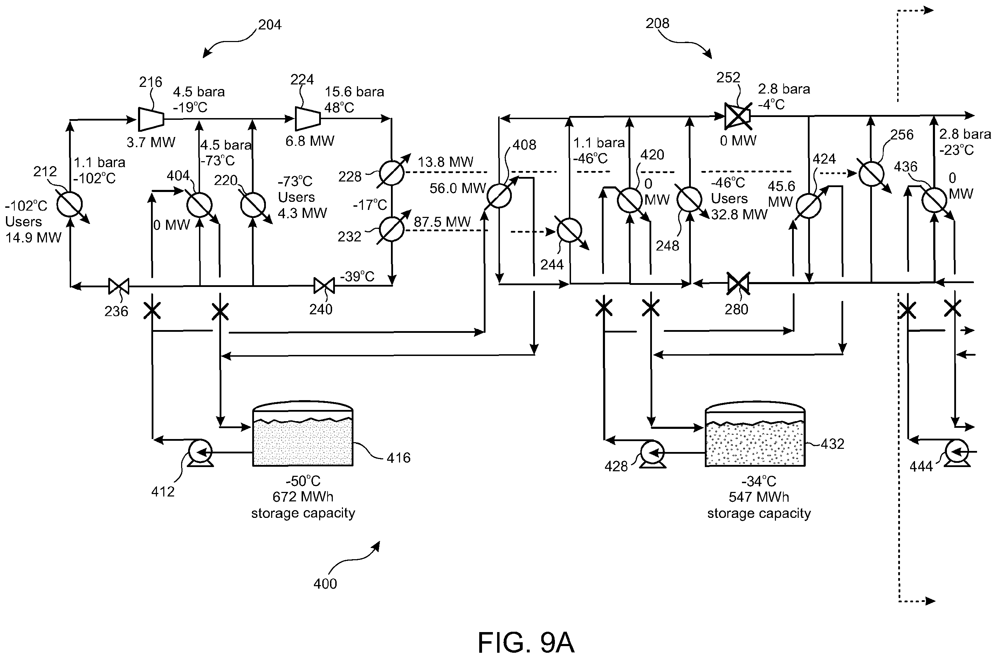

FIGs. 8A-8B depict a schematic process diagram of a modeled example 400 of a three-level PCM energy storage systems for the ethylene and propylene refrigeration systems 204, 208 of FIG. 5, during a charge cycle of the PCM energy storage system; and FIGs. 9A-9B depict a schematic process diagram of the PCM energy storage system 400 during its discharge cycle. As shown, the addition of the PCM system includes adding three separate PCM levels, each with its own PCM reservoir, pump, evaporator, and compressor. Specifically, the first PCM level includes a first PCM system evaporator 404 added to the second compression stage of the ethylene refrigeration system 204 in parallel with evaporator 220, a first PCM system condenser 408 added to the first compression stage of the propylene refrigeration system 208, a pump 412, and a first PCM reservoir 416. As modeled, the PCM used in the first level (PCM reservoir 416) has a freezing point of -50°C and sufficient volume to store 672 MWh of energy. The second PCM level includes a second PCM system evaporator 420 added to the first compression stage of propylene refrigeration system 208 in parallel with evaporators 244, 248; a second PCM system condenser 424 added to the propylene refrigeration system to receive at least part of the compressed gaseous propylene output from compressor 252; a pump 428; and a second PCM reservoir 432. As modeled, the PCM used in the second level (PCM reservoir 432) has a freezing point of -34°C and sufficient volume to store 547 MWh of energy. The third PCM level includes a third PCM system evaporator 436 added to the second compression stage of propylene refrigeration system 208 in parallel with evaporators 256, 260; a third PCM system condenser 440 added to the propylene refrigeration system to receive at least part of the compressed gaseous propylene output from compressor 264; a pump 444; and a second PCM reservoir 448. As modeled, the PCM used in the second level (PCM reservoir 448) has a freezing point of -6°C and sufficient volume to store 209 MWh of energy.

As shown in FIGs. 8A-8B, during charging of PCM system 400, a PCM slurry or a heat transfer fluid is circulated between the ethylene or propylene refrigeration systems 204, 208 and the respective PCM reservoir. In the first PCM level (FIG. 8A), PCM slurry or a heat transfer fluid is circulated by pump 412 from first PCM reservoir 416 to evaporator 404, where thermal energy is transferred from the PCM slurry or heat-transfer fluid to the ethylene at a temperature of -73°C to boil the ethylene. The PCM slurry or heat-transfer fluid then returns to PCM reservoir 416 where the PCM slurry or heat-transfer fluid absorbs additional thermal energy from the PCM reservoir at the PCM's freezing point of -50°C, and so on, until the PCM in PCM reservoir 416 is fully "charged" or solidified or charging is otherwise suspended. At the modeled charging rate, evaporator 404 removes thermal energy from the heat-transfer fluid at a rate of 56.0 MW, such that during a 12-hour charging period, 672 MWh of energy is removed from PCM 416 reservoir. Stated another way, 672 MWh of cold or thermal capacity is "stored" such that PCM reservoir 416 can later absorb up to 672 MWh (less any inefficiencies, e.g., introduced by absorption of thermal energy from external sources) of thermal energy from the propylene refrigeration system when the PCM reservoir is "discharged."

In the second PCM level, PCM slurry or a heat transfer fluid is circulated by pump 428 from second PCM reservoir 432 to evaporator 420, where thermal energy is transferred from the PCM slurry or heat-transfer fluid to the propylene at a temperature of -46°C to boil the propylene. The PCM slurry or heat-transfer fluid then returns to PCM reservoir 432 where the PCM slurry or heat-transfer fluid absorbs additional thermal energy from the PCM reservoir at the PCM's freezing point of -34°C, and so on, until the PCM in PCM reservoir 432 is fully "charged" or solidified or charging is otherwise suspended. At the modeled charging rate, evaporator 420 removes thermal energy from the heat-transfer fluid at a rate of 45.6 MW, such that during a 12-hour charging period, 547 MWh of energy is removed from PCM reservoir 432. Stated another way, 547 MWh of cold or thermal capacity is "stored" such that PCM reservoir 432 can later absorb up to 547 MWh (less any inefficiencies, e.g., introduced by absorption of thermal energy from external sources) of thermal energy from the propylene refrigeration system when the PCM reservoir is "discharged."

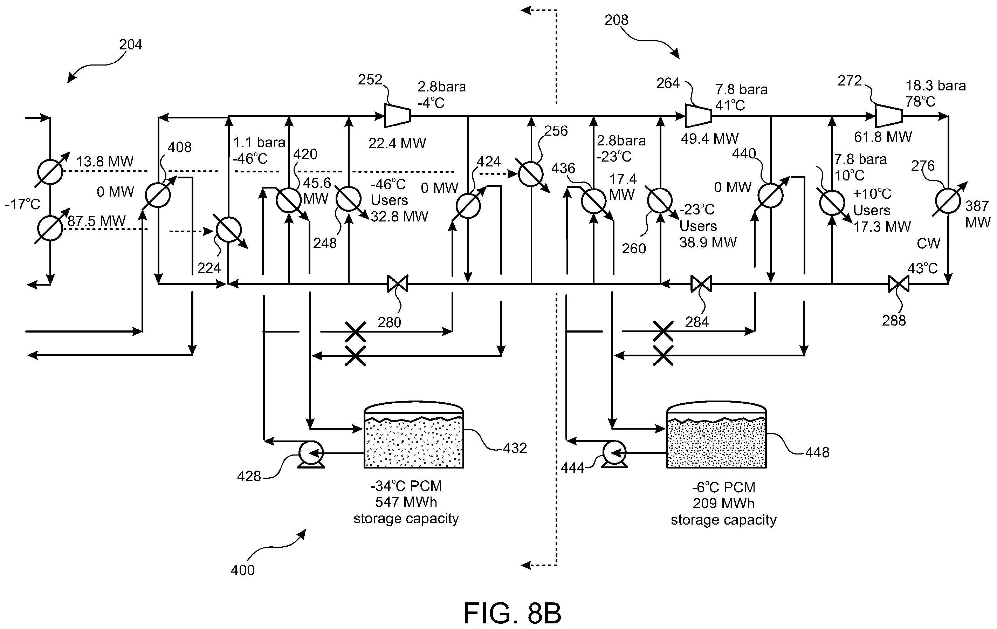

In the third PCM level (FIG. 8B), PCM slurry or a heat transfer fluid is circulated by pump 444 from third PCM reservoir 448 to evaporator 436, where thermal energy is transferred from the PCM slurry or heat-transfer fluid to the propylene at a temperature of -23°C to boil the propylene. The PCM slurry or heat-transfer fluid then returns to PCM reservoir 448 where the PCM slurry or heat-transfer fluid absorbs additional thermal energy from the PCM reservoir at the PCM's freezing point of -6°C, and so on, until the PCM in PCM reservoir 448 is fully "charged" or solidified or charging is otherwise suspended. At the modeled charging rate, evaporator 436 removes thermal energy from the heat-transfer fluid at a rate of 17.4 MW, such that during a 12-hour charging period, 209 MWh of energy is removed from PCM reservoir 448. Stated another way, 209 MWh of cold or thermal capacity is "stored" such that PCM reservoir 448 can later absorb up to 209 MWh (less any inefficiencies, e.g., introduced by absorption of thermal energy from external sources) of thermal energy from the propylene refrigeration system when the PCM reservoir is "discharged."

As indicated by the differences between FIG. 5 and FIGs. 8A-8B, the compressors are required to input additional energy to provide the required compression to "charge" the PCM reservoir. Specifically, ethylene second compressor 224 increases from 6.8 MW (FIG. 5) to 22.5 MW (FIG. 8A), propylene first compressor 252 increases from 7.6 MW to 22.4 MW, propylene second compressor 264 increases from 20.7 MW to 49.4 MW (FIG. 8B), and propylene third compressor 272 increases from 28.0 MW to 55.9 MW. Overall, the power demand for the compressors increases from 66.8 MW for the ethylene and propylene refrigeration systems 204, 208 alone (FIG. 5) to 159.8 MW for the ethylene and propylene refrigeration systems 204 and 208 in combination with the three-level PCM energy storage system 400 (FIGs. 8A-8B).

As shown in FIGs. 9A-9B, during discharging of PCM system 400, a PCM slurry or a heat transfer fluid is circulated between the propylene refrigeration system 208 and the respective PCM reservoir. In the first PCM level (FIG. 9A), PCM slurry or a heat transfer fluid is circulated by pump 412 from first PCM reservoir 416 to condenser 408, where thermal energy is transferred from the propylene to the PCM slurry or heat-transfer fluid at a temperature of -46°C to condense the propylene. The PCM slurry or heat-transfer fluid then returns to PCM reservoir 416 where the PCM reservoir absorbs thermal energy from the PCM slurry or heat-transfer fluid at the PCM's freezing point of -50°C, and so on, until the PCM in PCM reservoir 416 is fully "discharged" or liquefied or charging is otherwise suspended.

In the second PCM level, PCM slurry or a heat transfer fluid is circulated by pump 428 from second PCM reservoir 432 to condenser 424, where thermal energy is transferred from the propylene to the PCM slurry or heat-transfer fluid at a temperature of -23°C to condense the propylene. The PCM slurry or heat-transfer fluid then returns to PCM reservoir 432 where the PCM reservoir absorbs thermal energy from the PCM slurry or heat-transfer fluid at the PCM's freezing point of -34°C, and so on, until the PCM in PCM reservoir 432 is fully "discharged" or liquefied or charging is otherwise suspended.

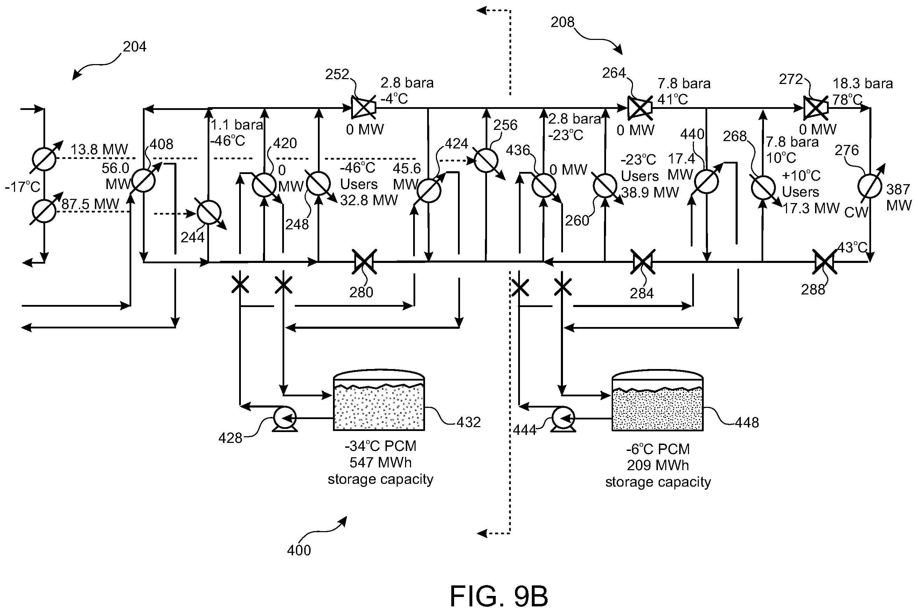

In the third PCM level (FIG. 9B), PCM slurry or a heat transfer fluid is circulated by pump 444 from third PCM reservoir 448 to condenser 440, where thermal energy is transferred from the propylene to the PCM slurry or heat-transfer fluid at a temperature of 10°C to condense the propylene. The PCM slurry or heat-transfer fluid then returns to PCM reservoir 448 where the PCM reservoir absorbs thermal energy from the PCM slurry or heat-transfer fluid at the PCM's freezing point of -6°C, and so on, until the PCM in PCM reservoir 448 is fully "discharged" or liquefied or charging is otherwise suspended.

As indicated by the differences between FIG. 5 and FIGs. 8A-8B, the compressors input less energy to provide the required compression to operate the refrigeration systems 204 and 208. Specifically, propylene first compressor 252 decreases from 7.6 MW to 0 MW (FIG. 9A), propylene second compressor 264 decreases from 20.7 MW to 0 MW (FIG. 9B), and propylene third compressor 272 decreases from 28.0 MW to 0 MW. Overall, the power demand for the compressors decreases from 66.8 MW for the ethylene and propylene refrigeration systems 204, 208 alone (FIG. 5) to 10.5 MW for the ethylene and propylene refrigeration systems 204, 208 in combination with the three-level PCM energy storage system 400 (FIGs. 9A-9B).

Table 2 summarizes the condenser power inputs during operation of the ethyelene and propylene refrigeration systems, both alone and in combination with the three-level PCM energy storage system in its charging cycle and discharging cycle:

**Table 2: Power Inputs & Outputs for Three-Level PCM System**

| | | | Three-level PCM | | |
|---|---|---|---|---|---|
| | | | No Cycling | Charging Cycle | Discharging Cycle |
| Base Refrig Train - Shaft Power, MW | | | | | |
| | Ethylene stage 1 | | 3.7 | 3.7 | 3.7 |
| | Ethylene stage 2 | | 6.8 | 6.8 | 6.8 |
| | Propylene stage 1 | | 7.6 | 7.6 | 0.0 |
| | Propylene stage 2 | | 20.7 | 20.7 | 0.0 |
| | Propylene Stage 3 | | 28.0 | 28.0 | 0.0 |
| | | Base train shaft power, MW | 66.8 | 66.8 | 10.5 |
| | | | | | |

| Charging Train - Shaft Power, MW | | | | | |
|---|---|---|---|---|---|
| | Ethylene stage 2 | | 0.0 | 15.7 | 0.0 |
| | Propylene stage 1 | | 0.0 | 14.8 | 0.0 |
| | Propylene stage 2 | | 0.0 | 28.7 | 0.0 |
| | Propylene Stage 3 | | 0.0 | 33.8 | 0.0 |
| | | Charging train shaft power, MW | 0.0 | 93.0 | 0.0 |
| | | | | | |
| | | Total refrig train shaft power, MW | 66.8 | 159.8 | 10.5 |
| | | Added energy during charging, MW | 93.0 | | |
| | | Energy reduction during discharging, MW | 56.3 | | |
| | | Efficiency of power storage | 60.5% | | |
| | | Power stored over 24 hour cycle, MWh | 676 | | |

In battery terms, the additional 93 MW of power used over the 12-hour charge period (1116 MWh) to charge a thermal "battery," then during discharge reduces the amount of power needed to run refrigeration system 200 by 56.3 MW over the 12-hour discharge period (676 MWh), resulting in an efficiency of 60.5%. The efficiency is reduced at least in part by the modeled temperature spreads of (1) for the first PCM level, 27°C between the charging temperature of -73°C at evaporator 404 and the discharging temperature of -46°C at condenser 408; (2) for the second PCM level, 23°C between the charging temperature of -46°C at evaporator 420 and -23°C at condenser 424; and (3) for the third PCM level, 33°C between the charging temperature of -23°C at evaporator 436 and the discharging temperature of 10°C at condenser 440. In other implementations, that efficiency can be improved by reducing the magnitude of that temperature spread. Overall, the three-level system increases the thermal capacity of the PCM system by 24%, but the increased capacity comes with increased complexity and the corresponding cost of constructing the more-complex system.

### Example 3: High-Efficiency Three-Level PCM System for Naphtha Cracker Ethylene & Propylene Refrigeration Systems

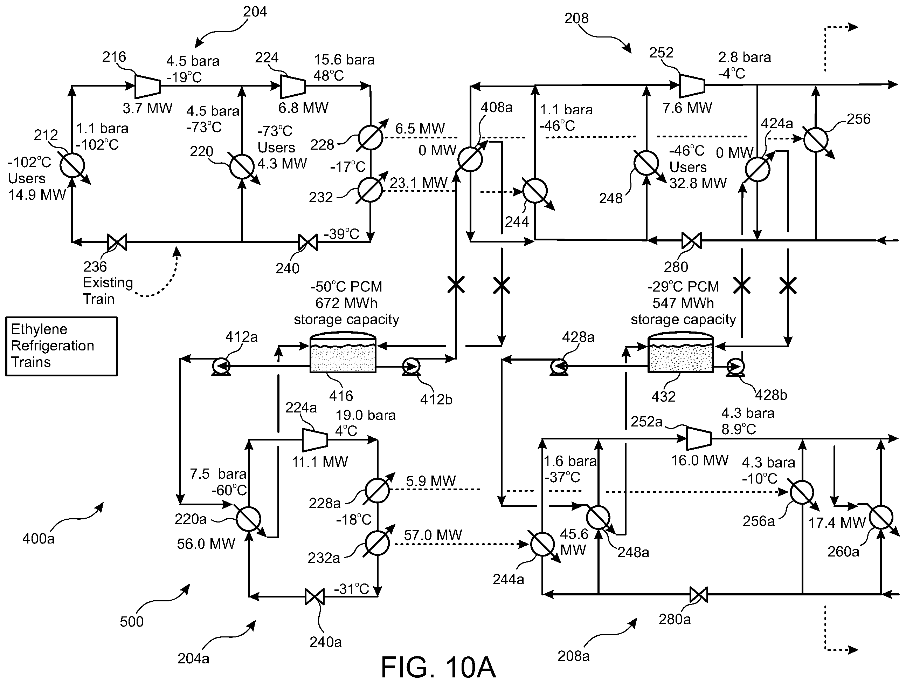

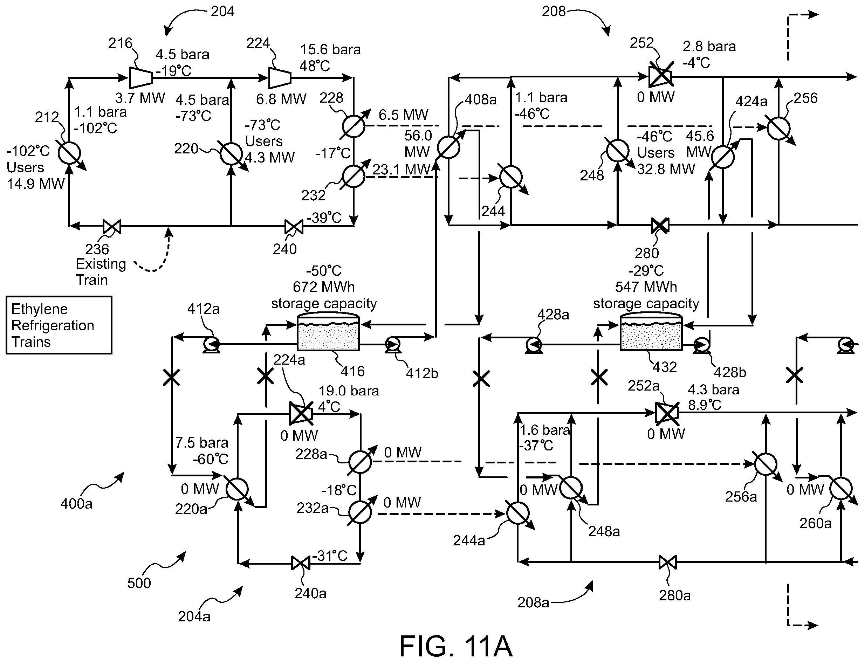

FIGs. 10A-10B depict a schematic process diagram a modeled example 400a of high-efficiency three-level PCM energy storage system for the ethylene and propylene refrigeration systems of FIG. 5 during a charge cycle of the PCM energy storage system; and FIGs. 11A-11B depict a schematic process diagram of PCM energy storage system 400a during its discharge cycle. System 400a is substantially similar to system 400, with the primary exception being that system 400a includes a separate refrigeration train 500 for charging the PCM reservoirs of system 400a, and the PCM system condensers 408, 424, and 440 are therefore positioned in the second refrigeration train 500 with an ethylene refrigeration system 204a and a propylene refrigeration system 208a, as described in more detail below.

Ethylene refrigeration system 204a is similar to ethylene refrigeration system 204, with the primary exceptions that system 204a omits the first compression stage (condenser 212, compressor 216, and valve 236) and uses condenser 220a to remove thermal energy from the PCM slurry or heat-transfer fluid of the first PCM level. Specifically, system 204a includes one compressing stage with a evaporator 220a and a compressor 224a, and a single condensing stage with a first condenser 228a and a second condenser 232a. In operation, condensed ethylene from condensers 228a, 232a is routed to evaporator 220a. In evaporator 220a, the condensed ethylene absorbs thermal energy and boils to a gaseous state at a temperature of -60°C and a pressure of 7.5 bara. The gaseous ethylene from evaporator 220a is then routed to compressor 224a where the gaseous ethylene is compressed to a pressure of 19.0 bara (Bar absolute) and temperature of 4°C. The compressed gaseous ethylene from compressor 224a is then routed to the condensers, where it is partially condensed in first condenser 228a and then further condensed in second condenser 232a. In the depicted configuration, a heat transfer fluid is circulated through the first condenser 228a to absorb thermal energy from the condensing ethylene for use in the propylene refrigeration system, and a heat-transfer fluid is also circulated through the second condenser 232a to absorb additional thermal energy from the condensing ethylene also for use in the propylene refrigeration system. The ethylene refrigeration system also includes a valve 240a that can be closed to prevent the flow of ethylene to evaporator 220a.

Propylene refrigeration system 208a includes three compressor stages and a condenser stage. The first compressing stage includes a first evaporator 244a, parallel second evaporator 248a, and a first compressor 252a. The second compressing stage includes a third evaporator 256a, a parallel fourth evaporator 260a, and a second compressor 264a. The third compressing stage includes a third compressor 272a. The condenser stage includes a single condenser 276a. In operation, condensed propylene from condenser 276a is routed to the evaporators 244a, 248a, 256a, 260a of the first and second compressing stages, and directly to compressor 272a of the third compressing stage. In first and second evaporators 244a, 248a, the condensed propylene absorbs thermal energy and boils to a gaseous state at a temperature of - 37°C and a pressure of 1.6 bara. As indicated by the dashed line from first condenser 228a of ethylene refrigeration system 204a, thermal energy from that first condenser 228a is used as a source of thermal energy in evaporator 244a to boil the propylene. The gaseous propylene is then routed to first compressor 252a where the gaseous propylene is compressed to a first pressure of 4.3 bara and a temperature of 8.9°C. In third and fourth evaporators 256a, 260a, the condensed propylene absorbs thermal energy and boils to a gaseous state at a temperature of - 10°C and a pressure of 4.3 bara. As indicated by the dashed line from second condenser 232a of ethylene refrigeration system 204a, thermal energy from that second condenser 232a is used as a source of thermal energy in evaporator 256a to boil the propylene. This gaseous propylene from evaporators 256a, 260a is then mixed with the compressed propylene from first compressor 252a, and the combined gaseous propylene is then routed to second compressor 264a, where the combined gaseous propylene is further compressed to a second pressure of 8.6 bara and temperature of 38°C. In the third compression stage, the condensed propylene from condenser 276a is mixed with the compressed propylene from second compressor 264a, and the combined gaseous propylene is then routed to third compressor 272a, where the combined gaseous propylene is further compressed to a third pressure of 18.3 bara and temperature of 78°C. The compressed gaseous propylene from third compressor 272a is then routed to condenser 276a, where it is condensed. The propylene refrigeration system also includes a first valve 280a that can be closed to prevent the flow of propylene to first and second evaporators 244a, 248a; a second valve 284a that can be closed to prevent the flow of propylene to any of third and fourth evaporators 256a, 260a or first and second evaporators 244a, 248a; and a third valve 288a that can be closed to prevent the flow of propylene to any of compressor 272a, third and fourth evaporators 256a, 260a, or first and second evaporators 244a, 248a.

As noted above, PCM system 400a is substantially similar to system 400, with two primary exceptions. First, for charging the PCMs: in the first PCM level, evaporator 220a of system 204a is used instead of evaporator 404 (FIG. 8A); in the second PCM level, evaporator 248a is used instead of evaporator 420 (FIG. 8A); and in the third PCM level, evaporator 260a is used instead of evaporator 436. Second, first PCM level includes a first pump 412a for circulating PCM slurry or heat transfer fluid for "charging" and a second pump 412b for circulating PCM slurry or heat-transfer fluid for "discharging;" the second PCM level includes a first pump 428a for circulating PCM slurry or heat transfer fluid for "charging" and a second pump 428b for circulating PCM slurry or heat-transfer fluid for "discharging;" and the third PCM level includes a first pump 444a for circulating PCM slurry or heat transfer fluid for "charging" and a second pump 444b for circulating PCM slurry or heat-transfer fluid for "discharging." As modeled, the PCM used in the first level (PCM reservoir 416a) has a freezing point of -50°C and sufficient volume to store 672 MWh of energy, the PCM used in the second level (PCM reservoir 432) has a freezing point of -29°C and sufficient volume to store 547 MWh of energy, and the PCM used in the second level (PCM reservoir 448) has a freezing point of 0°C and sufficient volume to store 209 MWh of energy.

As shown in FIGs. 10A-10B, during charging of PCM system 400a, a PCM slurry or a heat transfer fluid is circulated between the ethylene or propylene refrigeration systems 204a, 208, 208a and the respective PCM reservoir. In the first PCM level (FIG. 10A), PCM slurry or a heat transfer fluid is circulated by pump 412a from first PCM reservoir 416 to evaporator 220a, where thermal energy is transferred from the PCM slurry or heat-transfer fluid to the ethylene at a temperature of -60°C to boil the ethylene. The PCM slurry or heat-transfer fluid then returns to PCM reservoir 416 where the PCM slurry or heat-transfer fluid absorbs additional thermal energy from the PCM reservoir at the PCM's freezing point of -50°C, and so on, until the PCM in PCM reservoir 416 is fully "charged" or solidified or charging is otherwise suspended. At the modeled charging rate, evaporator 220a removes thermal energy from the heat-transfer fluid at a rate of 56.0 MW, such that during a 12-hour charging period, 672 MWh of energy is removed from PCM 416 reservoir. Stated another way, 672 MWh of cold or thermal capacity is "stored" such that PCM reservoir 416 can later absorb up to 672 MWh (less any inefficiencies, e.g., introduced by absorption of thermal energy from external sources) of thermal energy from the propylene refrigeration system when the PCM reservoir is "discharged."

In the second PCM level, PCM slurry or a heat transfer fluid is circulated by pump 428a from second PCM reservoir 432 to evaporator 248a, where thermal energy is transferred from the PCM slurry or heat-transfer fluid to the propylene at a temperature of -37°C to boil the propylene. The PCM slurry or heat-transfer fluid then returns to PCM reservoir 432 where the PCM slurry or heat-transfer fluid absorbs additional thermal energy from the PCM reservoir at the PCM's freezing point of -29°C, and so on, until the PCM in PCM reservoir 432 is fully "charged" or solidified or charging is otherwise suspended. At the modeled charging rate, evaporator 248a removes thermal energy from the heat-transfer fluid at a rate of 45.6 MW, such that during a 12-hour charging period, 547 MWh of energy is removed from PCM reservoir 432. Stated another way, 547 MWh of cold or thermal capacity is "stored" such that PCM reservoir 432 can later absorb up to 547 MWh (less any inefficiencies, e.g., introduced by absorption of thermal energy from external sources) of thermal energy from the propylene refrigeration system when the PCM reservoir is "discharged."

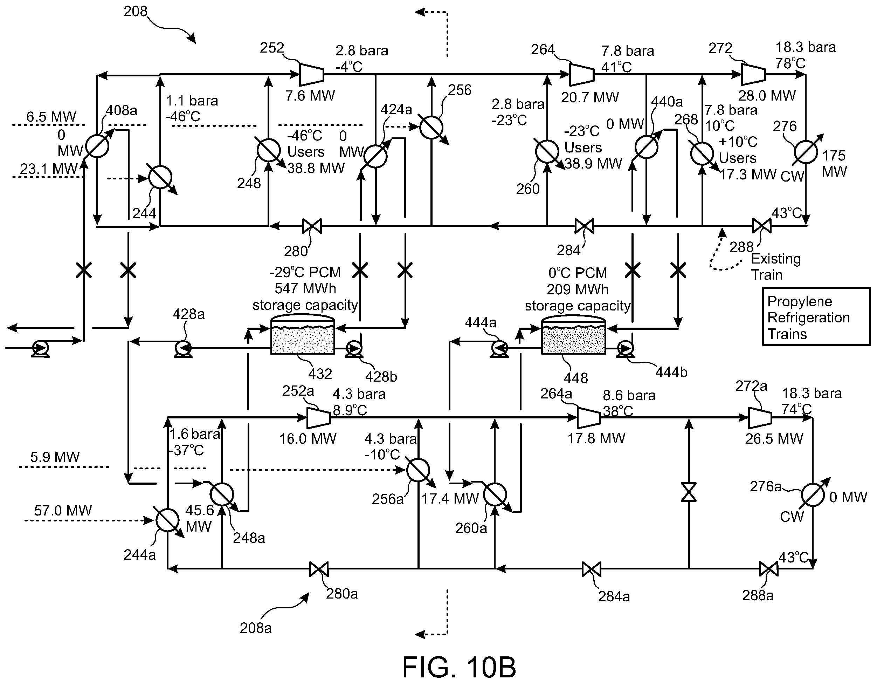

In the third PCM level (FIG. 10B), PCM slurry or a heat transfer fluid is circulated by pump 444a from third PCM reservoir 448 to evaporator 260a, where thermal energy is transferred from the PCM slurry or heat-transfer fluid to the propylene at a temperature of -10°C to boil the propylene. The PCM slurry or heat-transfer fluid then returns to PCM reservoir 448 where the PCM slurry or heat-transfer fluid absorbs additional thermal energy from the PCM reservoir at the PCM's freezing point of 0°C, and so on, until the PCM in PCM reservoir 448 is fully "charged" or solidified or charging is otherwise suspended. At the modeled charging rate, evaporator 436 removes thermal energy from the heat-transfer fluid at a rate of 17.4 MW, such that during a 12-hour charging period, 209 MWh of energy is removed from PCM reservoir 448. Stated another way, 209 MWh of cold or thermal capacity is "stored" such that PCM reservoir 448 can later absorb up to 209 MWh (less any inefficiencies, e.g., introduced by absorption of thermal energy from external sources) of thermal energy from the propylene refrigeration system when the PCM reservoir is "discharged."

As indicated by the differences between FIG. 5 and FIGs. 10A-10B, the compressors are required to input additional energy to provide the required compression to "charge" the PCM reservoir. Specifically, ethylene compressor 224a of system 500 requires 11.1 MW (FIG. 10A), propylene first compressor 252s requires 16.0 MW, propylene second compressor 264a requires 17.8 MW (FIG. 10B), and propylene third compressor 272a requires 26.5 MW. Overall, the power demand for the compressors increases from 66.8 MW for the ethylene and propylene refrigeration systems 204, 208 alone (FIG. 5) to 138.2 MW for the ethylene and propylene refrigeration systems 204, 208 in combination with refrigeration train 500 and three-level PCM energy storage system 400a (FIGs. 10A-10B).

As shown in FIGs. 11A-11B, during discharging of PCM system 400a, a PCM slurry or a heat transfer fluid is circulated between the propylene refrigeration system 208 and the respective PCM reservoir. In the first PCM level (FIG. 11A), PCM slurry or a heat transfer fluid is circulated by pump 412b from first PCM reservoir 416 to condenser 408a, where thermal energy is transferred from the propylene to the PCM slurry or heat-transfer fluid at a temperature of -46°C to condense the propylene. The PCM slurry or heat-transfer fluid then returns to PCM reservoir 416 where the PCM reservoir absorbs thermal energy from the PCM slurry or heat-transfer fluid at the PCM's freezing point of -50°C, and so on, until the PCM in PCM reservoir 416 is fully "discharged" or liquefied or charging is otherwise suspended.

In the second PCM level, PCM slurry or a heat transfer fluid is circulated by pump 428b from second PCM reservoir 432 to condenser 424a, where thermal energy is transferred from the propylene to the PCM slurry or heat-transfer fluid at a temperature of -23°C to condense the propylene. The PCM slurry or heat-transfer fluid then returns to PCM reservoir 432 where the PCM reservoir absorbs thermal energy from the PCM slurry or heat-transfer fluid at the PCM's freezing point of -29°C, and so on, until the PCM in PCM reservoir 432 is fully "discharged" or liquefied or charging is otherwise suspended.

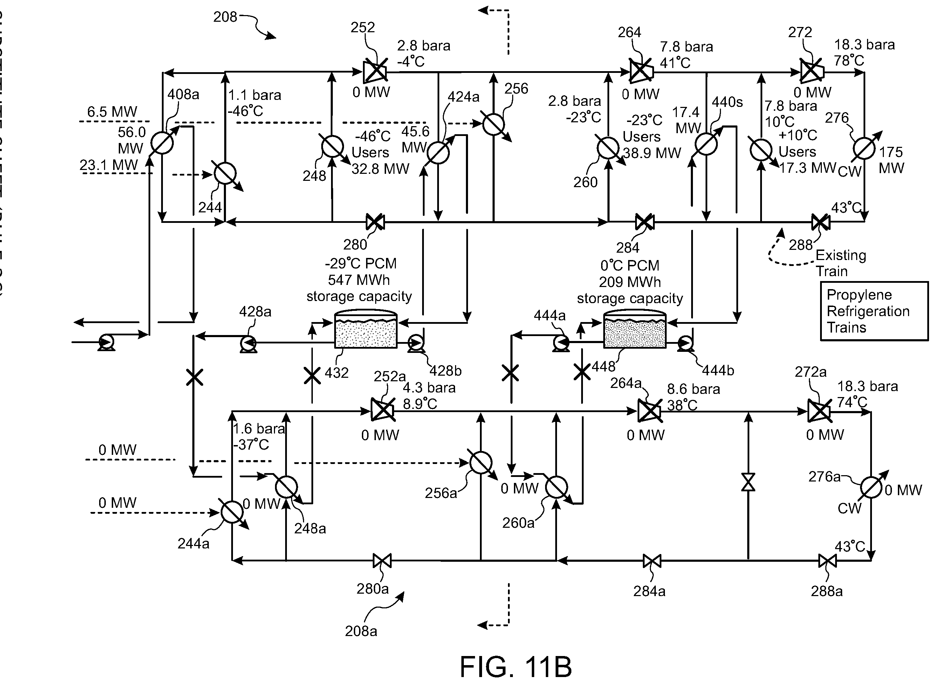

In the third PCM level (FIG. 11B), PCM slurry or a heat transfer fluid is circulated by pump 444b from third PCM reservoir 448 to condenser 440a, where thermal energy is transferred from the propylene to the PCM slurry or heat-transfer fluid at a temperature of 10°C to condense the propylene. The PCM slurry or heat-transfer fluid then returns to PCM reservoir 448 where the PCM reservoir absorbs thermal energy from the PCM slurry or heat-transfer fluid at the PCM's freezing point of 0°C, and so on, until the PCM in PCM reservoir 448 is fully "discharged" or liquefied or charging is otherwise suspended.

As indicated by the differences between FIG. 5 and FIGs. 11A-11B, during PCM discharge, the compressors of propylene refrigeration system 208 are required to input less energy to provide the required compression to operate the refrigeration systems 204, 208. Specifically, propylene first compressor 252 decreases from 7.6 MW to 0 MW (FIG. 11A), propylene second compressor 264 decreases from 20.7 MW to 0 MW (FIG. 11B), and propylene third compressor 272 decreases from 28.0 MW to 0 MW. Overall, the power demand for the compressors decreases from 66.8 MW for the ethylene and propylene refrigeration systems 204, 208 alone (FIG. 5) to 10.5 MW during PCM discharge for the ethylene and propylene refrigeration systems 204, 208 in combination with the three-level PCM energy storage system 400a (FIGs. 11A-11B).

The addition of the separate refrigeration train 500 for charging allows the temperatures differences to be reduced to improve efficiency of the PCM system. Table 4 shows the charging/discharging temperature differences between that three-level PCM system of FIGs. 8A-8B, 9A-9B and the high-efficiency three-level PCM system of FIGs. 10A-10B, 11A-11B. With the temperatures of the high-efficiency three-level system, the weighted average temperature difference is reduced from 26 to 15°C.

**Table 4: Heat-Transfer Temperatures**

| | **Temperatures of 3-level system, common pressures to existing train** | | | | |
|---|---|---|---|---|---|
| | Charging Temp, °C | PCM Temp, °C | Discharging Temp, °C | Total Delta Temp, °C | Duty, MW |
| Coldest PCM Level | -73 | -50 | -46 | 27 | 56.0 |
| Mid-PCM Level | -46 | -34 | -23 | 23 | 45.6 |
| Warmest PCM Level | -23 | -6 | 10 | 33 | 17.4 |
| | Weighted Average Delta Temp, °C | | | 26.3 | |
| | | | | | |

| | **Temperatures of 3-level system, unique charging train pressures** | | | | |
|---|---|---|---|---|---|
| | Charging Temp, °C | PCM Temp, °C | Discharging Temp, °C | Total Delta Temp, °C | Duty, MW |
| Coldest PCM Level | -60 | -50 | -46 | 14 | 56.0 |
| Mid-PCM Level | -37 | -29 | -23 | 14 | 45.6 |
| Warmest PCM Level | -10 | 0 | 10 | 20 | 17.4 |
| | Weighted Average Delta Temp, °C | | | 14.9 | |

Table 5 summarizes the condenser power inputs during operation of the ethylene and propylene refrigeration systems of Example 3, both alone and in combination with the three-level PCM energy storage system in its charging cycle and discharging cycle:

**Table 5: Power Inputs & Outputs for HE Three-Level PCM System**

| | | | Three-level PCM High Efficiency | | |
|---|---|---|---|---|---|
| | | | No Cycling | Charging Cycle | Discharging Cycle |
| Base Refrig Train - Shaft Power, MW | | | | | |
| | Ethylene stage 1 | | 3.7 | 3.7 | 3.7 |
| | Ethylene stage 2 | | 6.8 | 6.8 | 6.8 |
| | Propylene stage 1 | | 7.6 | 7.6 | 0.0 |
| | Propylene stage 2 | | 20.7 | 20.7 | 0.0 |
| | Propylene Stage 3 | | 28.0 | 28.0 | 0.0 |
| | | Base train shaft power, MW | 66.8 | 66.8 | 10.5 |
| | | | | | |

| Charging Train - Shaft Power, MW | | | | | |
|---|---|---|---|---|---|
| | Ethylene stage 2 | | 0.0 | 11.1 | 0.0 |
| | Propylene stage 1 | | 0.0 | 16.0 | 0.0 |
| | Propylene stage 2 | | 0.0 | 17.8 | 0.0 |
| | Propylene Stage 3 | | 0.0 | 26.5 | 0.0 |
| | | Charging train shaft power, MW | 0.0 | 71.4 | 0.0 |
| | | | | | |
| | | Total refrig train shaft power, MW | 66.8 | 138.2 | 10.5 |
| | | Added energy during charging, MW | 71.4 | | |
| | | Energy reduction during discharging, MW | 56.3 | | |
| | | Efficiency of power storage | 78.9% | | |
| | | Power stored over 24 hour cycle, MWh | 676 | | |

In battery terms, the additional 71.4 MW of power used over the 12-hour charge period (857 MWh) to charge a thermal "battery," then during discharge reduces the amount of power needed to run refrigeration system 200 by 56.3 MW of power over the 12-hour discharge period (676 MWh), resulting in an efficiency of 78.9%. The efficiency is therefore improved by the reductions in the modeled temperature spreads of (1) for the first PCM level, 14°C between the charging temperature of -60°C at evaporator 220a and the discharging temperature of -46°C at condenser 408a; (2) for the second PCM level, 14°C between the charging temperature of - 37°C at evaporator 248a and -23°C at condenser 424a; and (3) for the third PCM level, 20°C between the charging temperature of -10°C at evaporator 260a and the discharging temperature of 10°C at condenser 440a. Thus, the efficiency HE three-level system 400a relative to three-level system 400 improves from 60.5% to 78.9%, although at the expense of added complexity and expense.

### Examples 4-5: Ammonia Refrigeration Systems

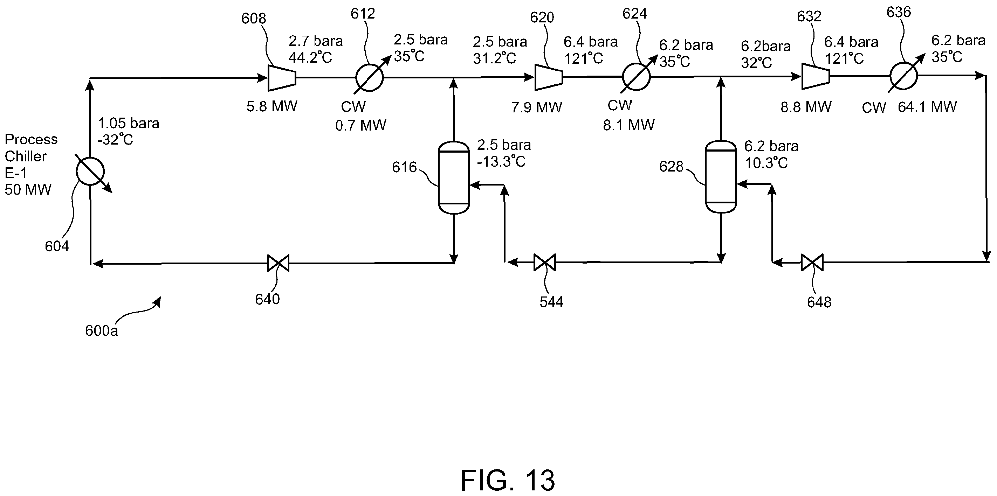

Several examples were modeled for the use of the present PCM energy storage systems and methods to run refrigeration cycles for an ammonia refrigeration system that is representative of refrigeration systems used in a variety of chemical separation processes, such as, for example, ammonia synthesis. FIG. 13 depicts a schematic process diagram of an example 600 of such an ammonia refrigeration system. For these purposes, ammonia refrigeration system 600 was modeled with a cooling duty of 50 MW at -32°C (1.05 bar evaporator pressure).

The typical or "existing" ammonia refrigeration system 600 includes three compressor stages. The first compressing stage includes a first evaporator 604, a first compressor 608, a first condenser 612. The second compressing stage includes a first flash drum 616, a second compressor 620, and a second condenser 624. The third compressing stage includes a second flash drum 628, a third compressor 632, and a third condenser 636. The ammonia refrigeration system also includes a first valve 640 that is used to let down the pressure from the first flash drum 616 to first condenser 604, a second valve 644 that is used to let down the pressure from the second flash drum 628 to first evaporator 616, and a third valve 648 that is used to let down the pressure from the third condenser 636 to flash drum 628.

In operation, condensed ammonia from first flash drum 616 is routed to first evaporator 604 of the first compressing stage. In first evaporator 604, the condensed ammonia absorbs thermal energy and boils to a gaseous state at a temperature of -32°C and a pressure of 1.05 bara. The gaseous ammonia is then routed to first compressor 608 where the gaseous ammonia is compressed to a first pressure of 2.7 bara and a temperature of 44.2°C. In first condenser 612, the compressed ammonia is cooled to a temperature of 35°C at a pressure of 2.5 bara. In the second compressing stage, condensed ammonia from second flash drum 628 is routed to first evaporator 616, and gaseous ammonia from first evaporator 616 is routed to mix with the ammonia exiting first condenser 612 to form a combined gaseous ammonia at a temperature of 31.2°C at a pressure of 2.5 bara. The combined gaseous ammonia is then routed to second compressor 620 where the gaseous ammonia is compressed to a second pressure of 6.4 bara and a temperature of 121°C. In second condenser 624, the compressed ammonia is cooled to a temperature of 35°C at a pressure of 6.2 bara. In the third compressing stage, cooled ammonia from third condenser 636 is routed to second evaporator 628 of the compressing stage, and gaseous ammonia from second flash drum 628 is routed to mix with the ammonia exiting second condenser 624 to form a combined gaseous ammonia at a temperature of 35°C at a pressure of 6.2 bara. The combined gaseous ammonia is then routed to third compressor 632 where the gaseous ammonia is compressed to a third pressure of 6.2 bara and a temperature of 121°C. In third condenser 636, the compressed ammonia is condensed at a temperature of 35°C at a pressure of 6.2 bara, and then routed to second flash drum 628 as described above.

In Example 4, the process is modeled with a "symmetric" cycle in which the PCM is "charged" for 12 hours, and "discharged" for 12 hours, during each 24 hour period, as shown in FIG. 12. In Example 5, the process is modeled with an "asymmetric" cycle in which the PCM is "charged" for 18 hours, and "discharged" for 6 hours, during each 24 hour period. Absorption of thermal energy from external sources (e.g., ambient) sources was not accounted for (assumed to be zero). In design of a real-world system, such external thermal energy can be accommodated by oversizing thermal capacity of PCM volume and compressor(s), taking into account particular insulation values. These models assumed the PCM to be directly dispersed in a slurry or encapsulated in small spheres within a slurry. Process simulations were performed in CHEMCAD, using the SRK method.
In each of Examples 4 and 5, the respective system is modeled with a separate refrigeration train for charging the PCM. These two systems were also modeled assuming the existing refrigeration train would be, or would be modified to be, driven by electric drivers (as opposed to burning fossil fuels), and assuming that the added PCM refrigeration train would also be driven by electric drivers.

### Example 5: One-Level PCM System for 50 MW Ammonia Refrigeration System (Symmetric Charge & Discharge)

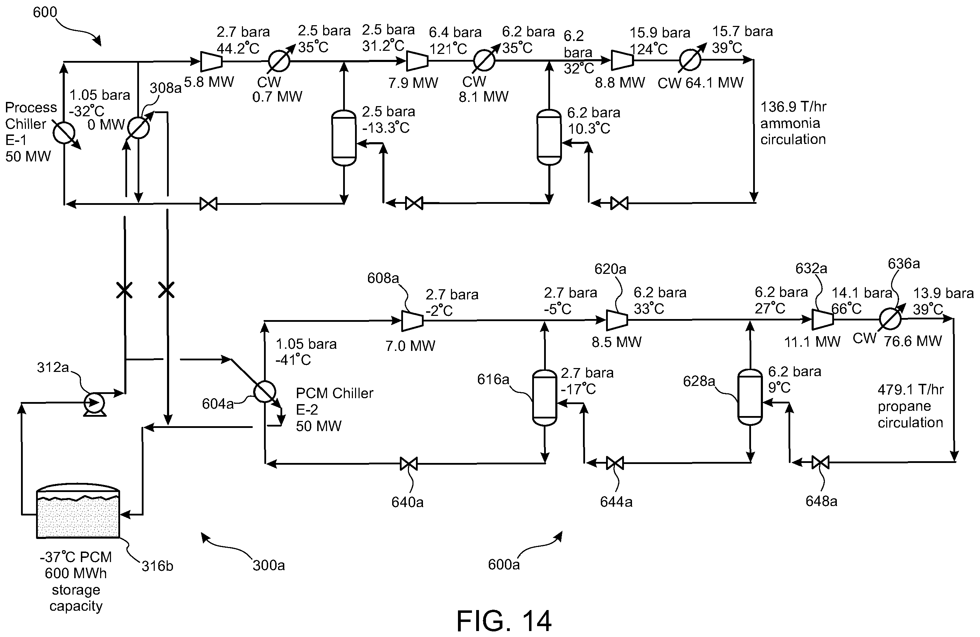

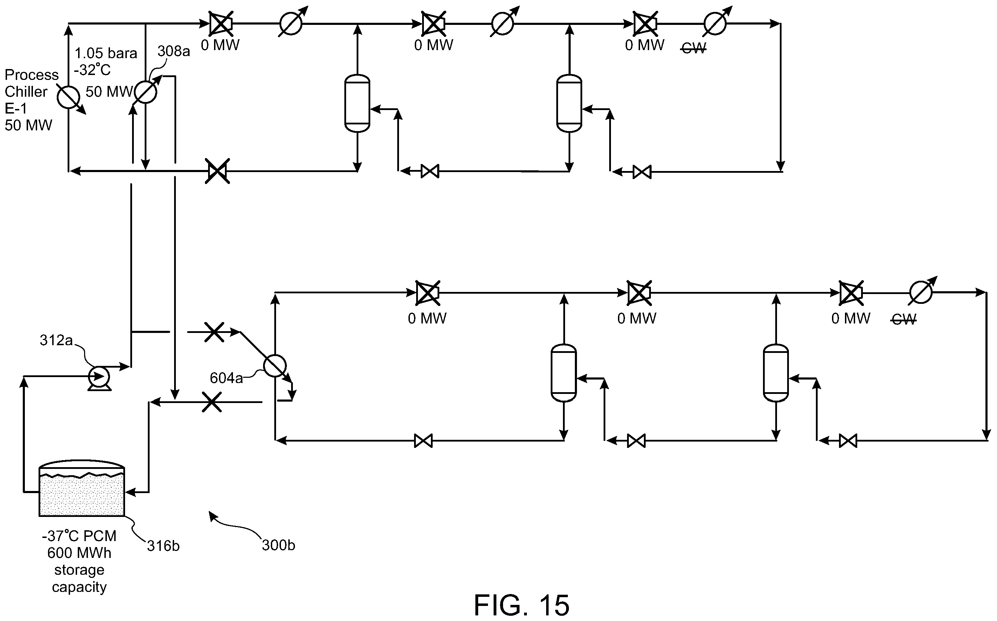

FIG. 14 depicts a schematic process diagram for the modeled example of a one-level PCM energy storage system 300a for ammonia refrigeration system 600 of FIG. 13 during a charge cycle of the PCM energy storage system, and FIG. 15 shows PCM energy storage system 300a during a discharge cycle. System 300a is similar to system 300, with the primary exception being that system 300a includes a separate refrigeration train 600a for charging the PCM reservoir of system 300a, and the PCM system condenser 604a is therefore disposed in the second refrigeration train 600a, as described in more detail below. As shown, the addition of the PCM system includes adding a PCM system condenser 308a to the first compression stage of ammonia refrigeration system 600a, with first PCM system condenser 308a in parallel with first evaporator 604a, a pump 312a and a PCM reservoir 316a and conduits and valves to route a heat-transfer fluid from the PCM to the PCM system evaporator and condenser.

PCM refrigeration system 600a is similar to system 600 in that system 600a includes three compressor stages, but uses propane as refrigerant instead of ammonia. The first compressing stage includes a first evaporator 604a and a first compressor 608a. The second compressing stage includes a first flash drum 616a and a second compressor 620a. The third compressing stage includes a second flash drum 628a, a third compressor 632a, and a condenser 636a. The refrigeration system also includes a first valve 640a that can be closed to prevent the flow of ammonia from first flash drum 616a to first condenser 604a, a second valve 644a that can be closed to prevent the flow of ammonia from second flash drum 628a to first flash drum 616a, and a third valve 648a that can be closed to prevent the flow of ammonia from condenser 636a to flash drum 628a.

In operation, condensed propane from first flash drum 616a is routed to first evaporator 604a of the first compressing stage. In first evaporator 604a, the condensed propane absorbs thermal energy and boils to a gaseous state at a temperature of -41°C and a pressure of 1.05 bara. The gaseous propane is then routed to first compressor 608a where the gaseous propane is compressed to a first pressure of 2.7 bara and a temperature of -2°C. In the second compressing stage, condensed propane from second flash drum 628a is routed to first flash drum 616a, and gaseous propane from first flash drum 616a is routed to mix with the propane exiting first compressor 6081 to form a combined gaseous propane at a temperature of -5°C at a pressure of 2.7 bara. The combined gaseous propane is then routed to second compressor 620a where the gaseous propane is compressed to a second pressure of 6.2 bara and a temperature of 33°C. In the third compressing stage, cooled propane from condenser 636a is routed to second flash drum 628a of the compressing stage, and gaseous propane from second flash drum 628a is routed to mix with the propane exiting second compressor 620a to form a combined gaseous propane at a temperature of 27°C at a pressure of 6.2 bara. The combined gaseous propane is then routed to third compressor 632a where the gaseous propane is compressed to a third pressure of 14.1 bara and a temperature of 66°C. In condenser 636a, the compressed propane is condensed at a temperature of 39°C at a pressure of 13.9 bara, and then routed to second flash drum 628a as described above.

As shown in FIG. 14 during charging of PCM reservoir 316a, a PCM slurry or a heat transfer fluid is circulated by pump 312a from PCM reservoir 316a to evaporator 604a, where thermal energy is transferred from the PCM slurry or heat-transfer fluid to the propane at a temperature of -41°C to boil the propane. The PCM slurry or heat-transfer fluid then returns to PCM 316a where the PCM slurry or heat-transfer fluid absorbs additional thermal energy from the PCM reservoir at the PCM's freezing point of -37°C, and so on, until the PCM is fully "charged" or solidified or charging is otherwise suspended. At the modeled charging rate, evaporator 604a removes thermal energy from the PCM slurry or heat-transfer fluid at a rate of 50 MW, such that during a 12-hour charging period, 600 MWh of energy is removed from PCM 316a reservoir. Stated another way, 600 MWh of cold or thermal capacity is "stored" such that the PCM reservoir can later absorb up to 600 MWh (less any inefficiencies, e.g., introduced by absorption of thermal energy from external sources) of thermal energy from ammonia refrigeration system 600 when the PCM reservoir is "discharged."

As indicated by the differences between FIG. 13 and FIG. 14, the compressors are required to input additional energy to provide the required compression to "charge" the PCM reservoir. Specifically, first compressor 608a of system 600a requires 7.0 MW (FIG. 14), second compressor 620a requires 8.5 MW, and third compressor 632a requires 11.1 MW. Overall, the power demand for the compressors increases from 22.5 MW for ammonia refrigeration system 600 alone (FIG. 13) to 49.1 MW for the ammonia refrigeration system 600 in combination with refrigeration train 600a and PCM energy storage system 300a.

As shown in FIG. 14, during discharging of PCM reservoir 316a, a PCM slurry or a heat transfer fluid is circulated by pump 312a from PCM reservoir 316a to condenser 308a in ammonia refrigeration system 600, where thermal energy is transferred from the ammonia to the PCM slurry or heat-transfer fluid at a temperature of -32°C to condense the ammonia. The PCM slurry or heat-transfer fluid then returns to PCM 316a where the PCM reservoir absorbs thermal energy from PCM slurry or heat-transfer fluid at the PCM's freezing point of -37°C, and so on, until the PCM is fully "discharged" or liquefied, or discharging is otherwise suspended. As indicated by the differences between FIG. 13 and FIG. 14, during PCM discharge, the compressors of ammonia refrigeration system 600 are required to input less energy to provide the required compression to operate ammonia refrigeration system 600. Specifically, first compressor 608 decreases from 5.8 MW to 0 MW, second compressor 620 decreases from 7.9 MW to 0 MW, and third compressor 632 decreases from 8.8 MW to 0 MW. Overall, the power demand for the compressors decreases from 66.8 MW for ammonia refrigeration system 600 alone (FIG. 13) to 0 MW during PCM discharge for refrigeration system 600 in combination with PCM energy storage system 300a (FIG. 14).

Table 6 summarizes the condenser power inputs during operation of the ammonia refrigeration system, both alone and in combination with the PCM energy storage system and additional PCM refrigeration system, in each of the PCM energy storage system's charging cycle and discharging cycle:

**Table 6: Power Inputs & Outputs for One-Level PCM System w/ Dedicated Refrigeration Train for Charging**

| | | | PCM | | |
|---|---|---|---|---|---|
| | | | No Cycling | Charging Cycle | Discharging Cycle |
| Shaft Power, MW | | | | | |
| | Ammonia stage 1 | | 5.8 | 5.8 | 0.0 |
| | Ammonia stage 2 | | 7.9 | 7.9 | 0.0 |
| | Ammonia stage 3 | | 8.7 | 8.7 | 0.0 |
| | Propane stage 1 | | 0.0 | 7.0 | 0.0 |
| | Propane stage 2 | | 0.0 | 8.5 | 0.0 |
| | Propane stage 3 | | 0.0 | 11.1 | 0.0 |
| | | Total shaft power, MW | 22.5 | 49.1 | 0.0 |
| | | | | | |
| | | Total average shaft power, MW | 24.5 | | |
| | | Added energy during charging, MW | 26.6 | | |
| | | Energy reduction during discharging, MW | 22.5 | | |
| | | Efficiency of power storage | 84.6% | | |
| | | Power stored over 24 hour cycle, MWh | 270 | | |

In battery terms, the additional 26.6 MW of power used over the 12-hour charge period (319 MWh) to charge a thermal "battery," then during discharge reduces the amount of power required to run ammonia refrigeration system 600 by 22.5 MW over the 12-hour discharge period (270 MWh), resulting in an efficiency of 84.6%. This efficiency is higher than the foregoing examples, at least in part because of the smaller temperature difference between the PCM charging and PCM discharging temperatures, specifically the difference of 9°C between the charging temperature of -41°C at evaporator 604a and the discharging temperature of -32°C at condenser 308a.

### Example 6: One-Level PCM System for 50 MW Ammonia Refrigeration System (Asymmetric Charge & Discharge)

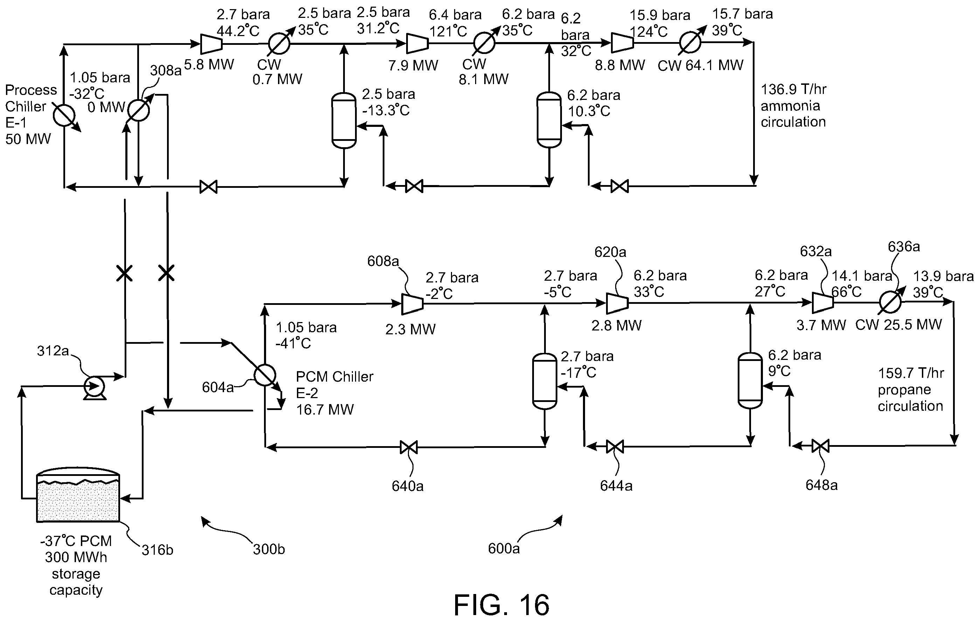

FIG. 16 depicts a schematic process diagram for a further modeled example 300b of one of the present one-level PCM energy storage systems for the ammonia refrigeration system of FIG. 13, during a charge cycle of the PCM energy storage system. PCM system 300b and PCM refrigeration train 600b are substantially similar to PCM system 300a and refrigeration train 600a, respectively, of FIGs. 14-15, with three primary exceptions. First, PCM energy storage system 300b is configured for asymmetric charge and discharge cycles, specifically, to be charged for an 18 hour period and discharged for a 6 hour period, in each 24 hour period. Second, because PCM system 300b need only run ammonia refrigeration system 600 for half the time (6 hours), PCM reservoir 316b has a thermal capacity of 300 MWh (one half that of PCM reservoir 316a). Third, because PCM refrigeration train 600a only needs to "charge" 300 MWh over 18 hours instead of 12 hours, the propane compressors 608a, 620a, and 632a need not compress propane at as high a rate as the corresponding compressors when used with PCM refrigeration system 300a. Specifically, compressor 608a need only run at a rate of 2.3 MW (versus 7.0 MW when used with system 300a for a symmetric charge/discharge cycle), compressor 620a need only run at a rate of 2.8 MW (versus 8.1 MW when used with system 300a for a symmetric charge/discharge cycle), and compressor 632a need only run at a rate of 3.7 MW (versus 8.8 MW when used with system 300a for a symmetric charge/discharge cycle). As such, either smaller-capacity compressors can be used for compressors 608a, 620a, 632a, potentially reducing costs, or the same-sized compressors can be used and simply operated at lower rates of compression. Where budget permits, the relatively larger size of the system in Example 5 allows for greater flexibility because that larger system can also be operated on an asymmetric schedule, such as 18 hours charge and 6 hours discharge, or 14 hours charge and 10 hours discharge, in which case the discharge cycle will deplete only part of the thermal capacity of the PCM reservoir.

Table 7 summarizes the condenser power inputs during operation of the ammonia refrigeration system of Example 6, both alone and in combination with the PCM energy storage system and additional PCM refrigeration system, in each of the PCM energy storage system's charging cycle and discharging cycle:

**Table 7: Power Inputs & Outputs for Asymmetrically Cycled One-Level PCM System w/ Dedicated Refrigeration Train for Charging**

| Number of hours per day on cycle | | | Single-level PCM | | |
|---|---|---|---|---|---|
| | | | No Cycling | Charging Cycle | Discharging Cycle |
| | | | N/A | 18 | 6 |
| Shaft Power, MW | | | | | |
| | Ammonia stage 1 | | 5.8 | 5.8 | 0.0 |
| | Ammonia stage 2 | | 7.9 | 7.9 | 0.0 |
| | Ammonia stage 3 | | 8.7 | 8.7 | 0.0 |
| | Propane stage 1 | | 0.0 | 2.3 | 0.0 |
| | Propane stage 2 | | 0.0 | 2.8 | 0.0 |
| | Propane stage 3 | | 0.0 | 3.7 | 0.0 |
| | | Total shaft power, MW | 22.5 | 31.3 | 0.0 |
| | | | | | |
| | | Total average shaft power, MW | 23.5 | | |
| | | Added energy during charging, MWh | 159 | | |
| | | Energy reduction during discharging, MWh | 135 | | |
| | | Efficiency of power storage | 85.2 % | | |
| | | Power stored over 24 hour cycle, MWh | 135 | | |

In battery terms, the additional 8.8 MW of power used over the 18-hour charge period (159 MWh) to charge a thermal "battery," then during discharge reduces the amount of power required to run ammonia refrigeration system 600 by 22.5 MW over the 6-hour discharge period (135 MWh), resulting in an efficiency of 85.2%. This efficiency is roughly the same as the system of Example 6, but the longer charging period and reduced PCM capacity reduce the size of the PCM refrigeration system 600a by roughly two-thirds.

The above specification and examples provide a complete description of the structure and use of exemplary embodiments. As such, the various illustrative embodiments of the present devices are not intended to be limited to the particular forms disclosed. Rather, they include all modifications and alternatives falling within the scope of the claims, and embodiments other than the one shown may include some or all of the features of the depicted embodiment. For example, components may be combined as a unitary structure, and/or connections may be substituted. Further, where appropriate, aspects of any of the examples described above may be combined with aspects of any of the other examples described to form further examples having comparable or different properties and addressing the same or different problems. Similarly, it will be understood that the benefits and advantages described above may relate to one embodiment or may relate to several embodiments.

The claims are not intended to include, and should not be interpreted to include, means-plus- or step-plus-function limitations, unless such a limitation is explicitly recited in a given claim using the phrase(s) "means for" or "step for," respectively.

## Claims

1. A system (100) for storing energy for refrigeration in a chemical separation process (108) of a chemical plant, the system comprising:
one or more thermally insulated vessels;
a phase change material (PCM) (104) disposed in the thermally insulated vessel(s);
a refrigeration cycle (112) of a chemical separation process;
a refrigerant circuit coupled to circulate a refrigerant fluid in thermal communication with the PCM (104) such that the PCM (104) releases thermal energy to the refrigerant fluid at a point in said refrigeration cycle (112) of the chemical separation process (108) that provides refrigeration to the chemical separation process (108) and charges the PCM (104);
where the PCM (104) is configured to transition from an initial state to a lower enthalpy state at a transition temperature that is above a lowermost working temperature at the point in the refrigeration cycle; and
where the PCM (104) releases at least 10 MWh to transition from the initial state to the lower enthalpy state.

2. The system (100) of claim 1, where the refrigerant circuit is part of a refrigeration system (200, 204, 208) that comprises a compressor (216, 224, 252, 264, 272, 608, 620, 632) configured to compress the refrigerant fluid such that the refrigerant fluid can be circulated to receive thermal energy in the chemical separation process (108), and the system (100) is configured to either:
receive cooled refrigerant fluid from the refrigeration system (200, 204, 208) and circulate the cooled refrigerant fluid through the refrigerant circuit such that the refrigerant fluid absorbs thermal energy from the PCM (104); or
receive warmed refrigerant fluid from the chemical separation process (108) and circulate the warmed refrigerant fluid through the refrigerant circuit such that the PCM (104) absorbs thermal energy from the warmed refrigerant fluid.

3. The system (100) of claim 2, where the refrigerant fluid is a first refrigerant fluid and the refrigerant circuit is a first refrigerant circuit, and the system further comprises:
a PCM refrigeration circuit comprising a compressor (216, 224, 252, 264, 272, 608, 620, 632), and a second refrigerant circuit configured to circulate a second refrigerant fluid in thermal communication with the PCM (104) such that the second refrigerant fluid absorbs thermal energy from the PCM (104).

4. The system (100) of any of claims 2-3, where the compressor (216, 224, 252, 264, 272, 608, 620, 632) is electric.

5. The system of any of claims 1-4, where the PCM has a phase transition below a temperature range from -170°C to 40°C.

6. The system (100) of any of claims 1-5, where the one or more insulated vessels are a first insulated vessel(s) and the PCM (104) is a first PCM, and the system further comprises:
one or more second insulated vessels;
a second phase change material (PCM) (104) disposed in the second thermally insulated vessel(s), the second PCM (104) configured to transition from an initial state to a higher enthalpy state at a second transition temperature that is above the transition temperature of the first PCM (104);
where the second PCM (104) requires at least 10 MWh to transition from the initial state to the higher enthalpy state.

7. The system (100) of any of claims 1-6, where the PCM (104) comprises one or more component selected from the group of components consisting of:
a paraffinic hydrocarbon;
an alcohol;
polydimethylsiloxane;
water;
an aqueous salt solution;
a water-salt mixture;
an organic chemical;
a mixture of two or more organic chemicals;
a eutectic mixture of two or more organic chemicals; and
a mixture of two or more inorganic chemicals.

8. The system (100) of claim 7, where the PCM (104) comprises a water-salt mixture that comprises one or more components selected from the group of components consisting of:
calcium dichloride (CaCl₂);
lithium chloride (LiCl);
magnesium chloride (MgCl₂);
zinc chloride (ZnCl₂);
hydrogen chloride (HCl);
lithium sulfate (Li₂SO₄);
sodium chloride (NaCl);
potassium chloride (KCl);
aluminum nitrate (Al(NO₃)₃);
combinations of any two or more of the foregoing components.

9. The system (100) of any of claims 1-8, where the PCM (104) is in a form selected from the group of forms consisting of:
a slurry in which the PCM (104) is directly suspended in a liquid within the insulated vessel(s);
an encapsulated slurry in which the PCM (104) is encapsulated in casings that are suspended in a liquid within the insulated vessel(s); and
a plurality of containers each containing a portion of the slurry and including at least one heat-transfer surface configured to permit thermal communication with the PCM (104).

10. The system (100) of claim 9, where the PCM (104) is in a slurry or encapsulated slurry form and the system is configured to agitate the PCM (104) within the insulated vessel(s).

11. The system (100) of any of claims 1-10, where the chemical separation process (108) is selected from the group of chemical separation processes consisting of: a steam cracking process, an ammonia synthesis process, a hydrogen production process, a para-xylene production process, propane dehydrogenation, olefin metathesis, and natural gas processing.

12. A method of storing energy for refrigeration in a chemical separation process (108) of a chemical plant, the method comprising:
during a discharge cycle, circulating a refrigerant fluid in thermal communication with a phase-change material (PCM) (104) such that the PCM releases thermal energy to the refrigerant fluid at a point in a refrigeration cycle (112) of the chemical separation process (108) that provides refrigeration to the chemical separation process (108) and charges the PCM (104);
where the PCM (104) is configured to transition from an initial state to a lower enthalpy state at a transition temperature that is above a lowermost working temperature of the refrigerant at the point in the refrigeration cycle (112); and
where the PCM (104) releases at least 10 MWh of energy to the refrigerant fluid during a 24-hour period.

13. The method of claim 12, where the 24-hour period includes one or more discharge cycles lasting a total 2-22 hours, and one or more recharge cycles lasting a total of 2-22 hours.

14. The method of claim 13, where the lengths of the recharge and discharge cycles are adjusted or selected based on a methodology selected from the group of methodologies consisting of:
in response to a request from a power grid operator to reduce consumption of electric power;
to reduce the total cost of electricity to continuously run the chemical separation process over the 24-hour period, taking into account variations in the price of electricity over the 24-hour period; and
in response to a temporary outage of at least one source of electricity to the chemical separation process.

15. The method of any of claims 12-14, further comprising:
during the recharge cycle, operating a compressor (216, 224, 252, 264, 272, 608, 620, 632) to simultaneously cool the refrigerant fluid that is circulated in thermal communication with the PCM (104) and refrigerant fluid that is used in a propylene or ethylene refrigeration system for the chemical separation process (108).

## Patentansprüche

1. System (100) zum Speichern von Energie zur Kühlung in einem chemischen Trennprozess (108) einer chemischen Anlage, wobei das System Folgendes umfasst:
einen oder mehrere wärmeisolierte Behälter;
ein Phasenwechselmaterial (PCM) (104), das in dem(den) wärmeisolierten Behälter(n) angeordnet ist; einen Kühlzyklus eines chemischen Trennprozesses;
einen Kältemittelkreislauf, der gekoppelt ist, um ein Kältemittelfluid in thermischer Verbindung mit dem PCM (104) zu zirkulieren, so dass das PCM (104) an einem Punkt in dem Kältezyklus (112) des chemischen Trennprozesses (108), der dem chemischen Trennprozess (108) Kühlung bereitstellt und das PCM (104) auflädt, Wärmeenergie an das Kältemittelfluid abgibt;
wobei das PCM (104) dazu ausgelegt ist, bei einer Übergangstemperatur, die oberhalb einer niedrigsten Arbeitstemperatur liegt, an dem Punkt in dem Kühlzyklus von einem Anfangszustand in einen Zustand niedrigerer Enthalpie überzugehen; und wobei das PCM (104) mindestens 10 MWh abgibt, um vom Anfangszustand in den Zustand niedrigerer Enthalpie überzugehen.

2. System (100) nach Anspruch 1, wobei der Kältemittelkreislauf Teil eines Kühlsystems (200, 204, 208) ist, das einen Kompressor (216, 224, 252, 264, 272, 608, 620, 632) umfasst, der dazu ausgelegt ist, das Kältemittelfluid so zu komprimieren, dass das Kältemittelfluid zirkuliert werden kann, um Wärmeenergie in dem chemischen Trennprozess (108) aufzunehmen, und das System (100) dazu ausgelegt ist, entweder:
gekühltes Kältemittelfluid von dem Kühlsystem (200, 204, 208) zu erhalten und das gekühlte Kältemittelfluid durch den Kältemittelkreislauf zu zirkulieren, so dass das Kältemittelfluid Wärmeenergie aus dem PCM (104) absorbiert; oder
erwärmtes Kältemittelfluid von dem chemischen Trennprozess (108) zu erhalten und das erwärmte Kältemittelfluid durch den Kältemittelkreislauf zu zirkulieren, so dass das PCM (104) Wärmeenergie aus dem erwärmten Kältemittelfluid absorbiert.

3. System (100) nach Anspruch 2, wobei das Kältemittelfluid ein erstes Kältemittelfluid ist und der Kältemittelkreislauf ein erster Kältemittelkreislauf ist, und das System ferner Folgendes umfasst:
einen PCM-Kühlkreislauf, der einen Kompressor (216, 224, 252, 264, 272, 608, 620, 632) umfasst, und einen zweiten Kältemittelkreislauf, der dazu ausgelegt ist, ein zweites Kältemittelfluid in thermischer Verbindung mit dem PCM (104) zu zirkulieren, so dass das zweite Kältemittelfluid Wärmeenergie aus dem PCM (104) absorbiert.

4. System (100) nach einem der Ansprüche 2 bis 3, wobei der Kompressor (216, 224, 252, 264, 272, 608, 620, 632) elektrisch ist.

5. System nach einem der Ansprüche 1 bis 4, wobei das PCM einen Phasenübergang unterhalb eines Temperaturbereichs von -170 °C bis 40 °C aufweist.

6. System (100) nach einem der Ansprüche 1 bis 5, wobei der eine oder die mehreren isolierten Behälter ein oder mehrere erste isolierte Behälter sind und das PCM (104) ein erstes PCM ist und das System ferner Folgendes umfasst:
einen oder mehrere zweite isolierte Behälter;
ein zweites Phasenwechselmaterial (PCM) (104), das in dem(den) zweiten wärmeisolierten Behälter(n) angeordnet ist, wobei das zweite PCM (104) dazu ausgelegt ist, bei einer zweiten Übergangstemperatur, die über der Übergangstemperatur des ersten PCM (104) liegt, von einem Anfangszustand in einen Zustand höherer Enthalpie überzugehen;
wobei das zweite PCM (104) mindestens 10 MWh benötigt, um von dem Anfangszustand in den Zustand höherer Enthalpie überzugehen.

7. System (100) nach einem der Ansprüche 1 bis 6, wobei das PCM (104) eine oder mehrere Komponenten umfasst, die aus der Gruppe von Komponenten ausgewählt sind, die aus Folgendem besteht:
einem paraffinischen Kohlenwasserstoff;
einem Alkohol;
Polydimethylsiloxan;
Wasser;
einer wässrigen Salzlösung;
einer Wasser-Salz-Mischung;
einer organischen Chemikalie;
einer Mischung aus zwei oder mehr organischen Chemikalien;
einer eutektischen Mischung aus zwei oder mehr organischen Chemikalien; und
einer Mischung aus zwei oder mehr anorganischen Chemikalien.

8. System (100) nach Anspruch 7, wobei das PCM (104) eine Wasser-Salz-Mischung umfasst, die eine oder mehrere Komponenten umfasst, die aus der Gruppe von Komponenten ausgewählt sind, die aus Folgendem besteht:
Calciumdichlorid (CaCl₂);
Lithiumchlorid (LiCl);
Magnesiumchlorid (MgCl₂);
Zinkchlorid (ZnCl₂);
Salzsäure (HCl);
Lithiumsulfat (Li₂SO₄);
Natriumchlorid (NaCl);
Kaliumchlorid (KCl);
Aluminiumnitrat (Al(NO₃)₃);
Kombinationen von beliebigen zwei oder mehr der vorstehenden Komponenten.

9. System (100) nach einem der Ansprüche 1 bis 8, wobei das PCM (104) in einer Form vorliegt, die aus der Gruppe von Formen ausgewählt ist, die aus Folgendem besteht:
einer Aufschlämmung, in der das PCM (104) direkt in einer Flüssigkeit innerhalb des oder der isolierten Behälter suspendiert ist;
einer eingekapselten Aufschlämmung, in der das PCM (104) in Hüllen eingekapselt ist, die in einer Flüssigkeit innerhalb des oder der isolierten Behälter suspendiert sind; und
mehreren Behältern, die jeweils einen Teil der Aufschlämmung enthalten und mindestens eine Wärmeübertragungsfläche beinhalten, die dazu ausgelegt ist, eine thermische Verbindung mit dem PCM (104) zu ermöglichen.

10. System (100) nach Anspruch 9, wobei das PCM (104) in einer Aufschlämmung oder einer Form einer eingekapselten Aufschlämmung vorliegt und das System dazu ausgelegt ist, das PCM (104) innerhalb des oder der isolierten Behälter zu rühren.

11. System (100) nach einem der Ansprüche 1 bis 10, wobei der chemische Trennprozess (108) ausgewählt ist aus der Gruppe von chemischen Trennprozessen, bestehend aus: einem Dampfcrackprozess, einem Ammoniaksyntheseprozess, einem Wasserstoffherstellungsprozess, einem para-Xylol-Herstellungsprozess, Propandehydrierung, Olefinmetathese und Erdgasverarbeitung.

12. Verfahren zum Speichern von Energie zur Kühlung in einem chemischen Trennprozess (108) einer chemischen Anlage, wobei das Verfahren Folgendes umfasst:
während eines Entladungszyklus, Zirkulieren eines Kältemittelfluids in thermischer Verbindung mit einem Phasenwechselmaterial (PCM) (104), so dass das PCM an einem Punkt in einem Kühlzyklus (112) des chemischen Trennprozesses (108), der dem chemischen Trennprozess (108) Kälte bereitstellt und das PCM (104) auflädt, Wärmeenergie an das Kältemittelfluid abgibt;
wobei das PCM (104) dazu ausgelegt ist, bei einer Übergangstemperatur, die oberhalb einer niedrigsten Arbeitstemperatur des Kältemittels liegt, an dem Punkt in dem Kühlzyklus (112) von einem Anfangszustand in einen Zustand niedrigerer Enthalpie überzugehen; und
wobei das PCM (104) während eines Zeitraums von 24 Stunden mindestens 10 MWh Energie an das Kältemittelfluid abgibt.

13. Verfahren nach Anspruch 12, wobei der Zeitraum von 24 Stunden einen oder mehrere Entladezyklen, die insgesamt 2 bis 22 Stunden dauern, und einen oder mehrere Aufladezyklen umfasst, die insgesamt 2 bis 22 Stunden dauern.

14. Verfahren nach Anspruch 13, wobei die Längen der Auflade- und Entladezyklen basierend auf einer Verfahrensweise angepasst oder ausgewählt werden, die aus der Gruppe von Verfahrensweisen ausgewählt ist, die aus Folgendem besteht:
als Reaktion auf eine Anforderung von einem Stromnetzbetreiber, den Verbrauch an elektrischer Leistung zu reduzieren;
die Gesamtkosten für elektrischen Strom zu reduzieren, um den chemischen Trennprozess über den Zeitraum von 24 Stunden kontinuierlich durchzuführen, wobei die Schwankungen des Strompreises über den Zeitraum von 24 Stunden berücksichtigt werden; und
als Reaktion auf einen vorübergehenden Ausfall mindestens einer Stromquelle für den chemischen Trennprozess.

15. Verfahren nach einem der Ansprüche 12 bis 14, ferner umfassend:
während des Aufladezyklus, Betreiben eines Kompressors (216, 224, 252, 264, 272, 608, 620, 632) zum gleichzeitigen Kühlen des Kältemittelfluids, das in thermischer Verbindung mit dem PCM (104) zirkuliert wird, und des Kältemittelfluids, das in einem Propylen- oder Ethylen-Kühlsystem für den chemischen Trennprozess (108) verwendet wird.

## Revendications

1. Système (100) destiné à stocker de l'énergie en vue d'une réfrigération dans un procédé de séparation chimique (108) d'une installation chimique, le système comprenant :
une ou plusieurs cuves thermiquement isolées ;
un matériau à changement de phase (PCM) (104) disposé dans la/les cuve(s) thermiquement isolée(s) ; un cycle frigorifique d'un procédé de séparation chimique ;
un circuit frigorifique couplé pour faire circuler un fluide frigorigène en communication thermique avec le PCM (104), de sorte que le PCM (104) libère de l'énergie thermique dans le fluide frigorigène en un point dudit cycle frigorifique (112) du procédé de séparation chimique (108) qui assure la réfrigération du procédé de séparation chimique (108) et charge le PCM (104) ;
le PCM (104) étant conçu pour passer d'un état initial à un état de plus faible enthalpie à une température de transition qui est plus haute qu'une température de fonctionnement la plus basse au point du cycle frigorifique ; et
le PCM (104) libérant au moins 10 MWh pour passer de l'état initial à l'état de plus faible enthalpie.

2. Système (100) de la revendication 1, le circuit frigorifique faisant partie d'un système de réfrigération (200, 204, 208) qui comprend un compresseur (216, 224, 252, 264, 272, 608, 620, 632) conçu pour comprimer le fluide frigorigène, de sorte que le fluide frigorigène peut être mis en circulation afin de recevoir de l'énergie thermique dans le procédé de séparation chimique (108), et le système (100) étant conçu pour :
recevoir un fluide frigorigène refroidi provenant du système de réfrigération (200, 204, 208) et faire circuler le fluide frigorigène refroidi à travers le circuit frigorifique, de sorte que le fluide frigorigène absorbe l'énergie thermique issue du PCM (104) ; ou
recevoir un fluide frigorigène réchauffé provenant du procédé de séparation chimique (108) et faire circuler le fluide frigorigène réchauffé à travers le circuit frigorifique, de sorte que le PCM (104) absorbe l'énergie thermique issue du fluide frigorigène réchauffé.

3. Système (100) de la revendication 2, le fluide frigorigène étant un premier fluide frigorigène et le circuit frigorifique étant un premier circuit frigorifique, et le système comprenant en outre :
un circuit de réfrigération de PCM comprenant un compresseur (216, 224, 252, 264, 272, 608, 620, 632) et un deuxième circuit de fluide frigorigène conçu pour faire circuler un deuxième fluide frigorigène en communication thermique avec le PCM (104), de sorte que le deuxième fluide frigorigène absorbe l'énergie thermique issue du PCM (104).

4. Système (100) de l'une quelconque des revendications 2 et 3, dans lequel le compresseur (216, 224, 252, 264, 272, 608, 620, 632) est électrique.

5. Système de l'une quelconque des revendications 1 à 4, dans lequel le PCM présente une transition de phase en dessous d'une plage de température allant de - 170 °C à 40 °C.

6. Système (100) de l'une quelconque des revendications 1 à 5, la ou les cuves isolées étant une/de première(s) cuve(s) isolée(s) et le PCM (104) étant un premier PCM, et le système comprenant en outre :
une ou plusieurs deuxièmes cuves isolées ;
un deuxième matériau à changement de phase (PCM) (104) disposé dans la/les deuxième(s) cuve(s) thermiquement isolée(s), le deuxième PCM (104) étant conçu pour passer d'un état initial à un état de plus forte enthalpie à une deuxième température de transition qui est plus haute que la température de transition du premier PCM (104) ;
le deuxième PCM (104) nécessitant au moins 10 MWh pour passer de l'état initial à l'état de plus forte enthalpie.

7. Système (100) de l'une quelconque des revendications 1 à 6, dans lequel le PCM (104) comprend un ou plusieurs composants choisis dans le groupe de composants constitué par :
un hydrocarbure paraffinique ;
un alcool ;
le polydiméthylsiloxane ;
l'eau ;
une solution saline aqueuse ;
un mélange eau-sel ;
un produit chimique organique ;
un mélange d'au moins deux produits chimiques organiques ;
un mélange eutectique d'au moins deux produits chimiques organiques ; et
un mélange d'au moins deux produits chimiques inorganiques.

8. Système (100) de la revendication 7, dans lequel le PCM (104) comprend un mélange eau-sel qui comprend un ou plusieurs composants choisis dans le groupe de composants constitué par :
le dichlorure de calcium (CaCl₂) ;
le chlorure de lithium (LiCl) ;
le chlorure de magnésium (MgCl₂) ;
le chlorure de zinc (ZnCl₂) ;
le chlorure d'hydrogène (HCl) ;
le sulfate de lithium (Li₂SO₄) ;
le chlorure de sodium (NaCl) ;
le chlorure de potassium (KCl) ;
le nitrate d'aluminium (Al(NO₃)₃) ;
les combinaisons d'au moins deux des composants précédents quels qu'ils soient.

9. Système (100) de l'une quelconque des revendications 1 à 8, dans lequel le PCM (104) se présente sous une forme choisie dans le groupe de formes constitué par :
une bouillie dans laquelle le PCM (104) est directement mis en suspension dans un liquide à l'intérieur de la/des cuves(s) isolée(s) ;
une bouillie encapsulée dans laquelle le PCM (104) est encapsulé dans des coques qui sont mises en suspension dans un liquide à l'intérieur de la/des cuve(s) isolée(s) ; et
une pluralité de récipients contenant chacun une partie de la bouillie et comportant au moins une surface de transfert de chaleur conçue pour permettre une communication thermique avec le PCM (104).

10. Système (100) de la revendication 9, le PCM (104) se présentant sous la forme d'une bouillie ou d'une bouillie encapsulée et le système étant conçu pour agiter le PCM (104) à l'intérieur de la/des cuve(s) isolée(s).

11. Système (100) de l'une quelconque des revendications 1 à 10, le procédé de séparation chimique (108) étant choisi dans le groupe de procédés de séparation chimique constitué par : un procédé de vapocraquage, un procédé de synthèse d'ammoniac, un procédé de production d'hydrogène, un procédé de production de paraxylène, la déshydrogénation du propane, la métathèse des oléfines, et le traitement du gaz naturel.

12. Procédé de stockage d'énergie en vue d'une réfrigération dans un procédé de séparation chimique (108) d'une installation chimique, le procédé comprenant :
lors d'un cycle de décharge, la circulation d'un fluide frigorigène en communication thermique avec un matériau à changement de phase (PCM) (104) de telle sorte que le PCM libère de l'énergie thermique dans le fluide frigorigène en un point d'un cycle frigorifique (112) du procédé de séparation chimique (108) qui assure la réfrigération du procédé de séparation chimique (108) et charge le PCM (104) ;
le PCM (104) étant conçu pour passer d'un état initial à un état de plus faible enthalpie à une température de transition qui est plus haute qu'une température de fonctionnement la plus basse du fluide frigorigène au point du cycle frigorifique (112) ; et
le PCM (104) libérant au moins 10 MWh d'énergie dans le fluide frigorigène par période de 24 heures.

13. Procédé de la revendication 12, dans lequel la période de 24 heures comporte un ou plusieurs cycles de décharge durant au total 2 à 22 heures, et un ou plusieurs cycles de recharge durant au total 2 à 22 heures.

14. Procédé de la revendication 13, dans lequel les longueurs des cycles de recharge et de décharge sont ajustées ou sélectionnées sur la base d'une méthodologie choisie dans le groupe de méthodologies constitué par :
en réponse à une demande d'un opérateur de réseau électrique de réduire la consommation d'électricité ;
pour réduire le coût total de l'électricité nécessaire pour faire fonctionner en continu le procédé de séparation chimique sur la période de 24 heures, en tenant compte des variations du prix de l'électricité sur la période de 24 heures ; et
en réponse à une coupure temporaire d'au moins une source d'électricité alimentant le procédé de séparation chimique.

15. Procédé de l'une quelconque des revendications 12 à 14, comprenant en outre :
lors du cycle de recharge, le fonctionnement d'un compresseur (216, 224, 252, 264, 272, 608, 620, 632) pour refroidir simultanément le fluide frigorigène que l'on fait circuler en communication thermique avec le PCM (104) et le fluide frigorigène qui est utilisé dans un système de réfrigération au propylène ou à l'éthylène pour le procédé de séparation chimique (108).
